(19) Europäisches Patentamt / European Patent Office / Office européen des brevets

(11) **EP 4 102 740 A1**

(12) **EUROPEAN PATENT APPLICATION**
published in accordance with Art. 153(4) EPC

(43) Date of publication:
**14.12.2022 Bulletin 2022/50**

(51) International Patent Classification (IPC):
***H04B 7/185*** (2006.01)

(21) Application number: **21776687.2**

(52) Cooperative Patent Classification (CPC):
**H04B 7/185; H04B 7/19**

(22) Date of filing: **24.03.2021**

(86) International application number:
**PCT/CN2021/082555**

(87) International publication number:
**WO 2021/190526 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.03.2020 CN 202010228291**

(71) Applicant: **Huawei Technologies Co., Ltd.
Longgang
Shenzhen, Guangdong 518129 (CN)**

(72) Inventors:
• **ZHANG, Chengchen
Shenzhen, Guangdong 518129 (CN)**
• **SHU, Lin
Shenzhen, Guangdong 518129 (CN)**

(74) Representative: **Gill Jennings & Every LLP
The Broadgate Tower
20 Primrose Street
London EC2A 2ES (GB)**

(54) **SATELLITE EPHEMERIS UPDATE METHOD AND COMMUNICATION APPARATUS**

(57) This application provides a satellite ephemeris update method and a communication apparatus. The method includes: A first network element determines whether an ephemeris in a terminal device needs to be updated; and the first network element sends first information to the terminal device, where the first information includes an updated ephemeris or indication information indicating that the ephemeris does not change. Optionally, the first network element may be a core network element. For example, the first network element may be an AMF, an SMF, or the like. According to the ephemeris update method provided in this application, the terminal device is timely notified of ephemeris update information, so that the terminal device can timely and effectively obtain the updated ephemeris. This reduces a delay of accessing a satellite cell by the terminal device, and improves communication efficiency and user experience.

First network element

Terminal device

S210: Determine whether an ephemeris in the terminal device needs to be updated

S220: Send first information, where the first information includes an updated ephemeris or indication information indicating that the ephemeris does not change

FIG. 3

Processed by Luminess, 75001 PARIS (FR)

**Description**

This application claims priority to Chinese Patent Application No. 202010228291.5, filed with the China National Intellectual Property Administration on March 27, 2020 and entitled "SATELLITE EPHEMERIS UPDATE METHOD AND COMMUNICATION APPARATUS", which is incorporated herein by reference in its entirety.

**TECHNICAL FIELD**

This application relates to the satellite communication field, and more specifically, to a satellite ephemeris update method and a communication apparatus.

**BACKGROUND**

As satellite technologies gradually mature, there are thousands of satellites. As a quantity of satellites increases, precision, breadth, and the like of satellite coverage are greatly improved, thereby laying a foundation for wide use of satellite communication.

A feature of communication performed by a terminal device through a satellite is that coverage and an inclination angle of a beam constantly change. Before successfully accessing a satellite network, the terminal device needs to search for an available network. Because a visible antenna angle of a satellite cell covered by the satellite is much narrower than that of a terrestrial cell, and the satellite keeps moving, these all increase difficulty of accessing the satellite cell by the terminal device by searching for the satellite network. If the terminal device directly blindly searches for the satellite cell without location information of the satellite, it may take several hours to successfully find the network. This severely affects user experience. By providing an ephemeris of the satellite for the terminal device, network search efficiency of the terminal device can be greatly improved.

With change of time, the ephemeris of the satellite that serves the terminal device may change. Currently, an ephemeris stored in the terminal device cannot be effectively and timely updated. Consequently, precision of an orbit or a satellite location predicted by the terminal device is reduced, and the terminal device needs longer time to successfully access the satellite cell. This increases a communication delay of the terminal device, and reduces communication efficiency and user experience.

**SUMMARY**

According to a satellite ephemeris update method and a communication apparatus provided in this application, a terminal device is timely notified of ephemeris update information, so that the terminal device can timely and effectively obtain an updated ephemeris. This reduces a delay of accessing a satellite cell by the terminal device, and improves communication efficiency and user experience.

According to a first aspect, a satellite ephemeris update method is provided. The method includes: A first network element determines whether an ephemeris in a terminal device needs to be updated; and the first network element sends first information to the terminal device, where the first information includes an updated ephemeris or indication information indicating that the ephemeris does not change. Optionally, the first network element may be a core network element. For example, the first network element may be an AMF, an SMF, or the like.

According to the satellite ephemeris update method provided in the first aspect, the terminal device is notified of an ephemeris update status. If the ephemeris has changed, a core network side (or the core network element) can timely obtain a latest ephemeris without waiting for a request from the terminal device, so that the terminal device can timely and effectively obtain the updated ephemeris. This improves precision of an orbit or a satellite location predicted by the terminal device, reduces a delay of accessing a satellite cell by the terminal device, and improves communication efficiency and user experience.

Optionally, if the change of the ephemeris still meets an ephemeris change precision requirement of the terminal device or the ephemeris does not change, the first network element may not send the indication information indicating that the ephemeris does not change to the terminal device. If the terminal device does not receive the indication information indicating that the ephemeris does not change or the updated ephemeris sent by the AMF, it is considered by default that the ephemeris does not change, and the first terminal device may continue to use a previous ephemeris to search for a satellite and access the satellite cell.

In a possible implementation of the first aspect, the method further includes: The first network element receives ephemeris update indication information from the terminal device, where the ephemeris update indication information is used to indicate to update the ephemeris in the terminal device. The first network element may determine, based on the ephemeris update indication information, whether the ephemeris in the terminal device needs to be updated. In this implementation, the terminal device sends the ephemeris update indication information to the first network element, and the first network element (for example, the AMF) determines, based on the ephemeris update indication information, whether the ephemeris changes. The first network element does not need to actively track the change of the ephemeris. This reduces overheads and load of the first network element. In addition, the terminal device can timely obtain the latest ephemeris; and when the ephemeris does not change or a change degree is small, the first network element does not need to send the ephemeris update indication information. This can reduce signaling consumption.

Optionally, the ephemeris update indication information may be carried in any uplink NAS message, or carried in other possible signaling.

Optionally, the uplink NAS message sent by the terminal device to the first network element may not include the ephemeris update indication. For example, the NAS message itself may be used for a purpose of requesting a network to send the latest ephemeris to the terminal device.

In a possible implementation of the first aspect, the ephemeris update indication information includes one or more of a satellite identifier or an orbit identifier, the satellite identifier includes an identifier of a first satellite that serves the terminal device, and the orbit identifier includes an identifier of an orbit in which the first satellite is located. It should be understood that the first satellite may include one or more satellites. For example, the first satellite that serves the terminal device includes one or more of a satellite that currently serves the terminal device or a satellite that is to serve the terminal device. The satellite identifier includes the identifier of the first satellite that serves the terminal device, the orbit identifier includes the identifier of the orbit in which the first satellite is located, and the orbit in which the first satellite is located may be one or more orbits. Therefore, the ephemeris may include an ephemeris of a satellite identified by one or more satellite identifiers, and/or ephemerides of all satellites in an orbit identified by one or more orbit identifiers. Alternatively, the ephemeris may be an ephemeris of an entire satellite system. The ephemeris of the first satellite may also be referred to as an ephemeris stored in the terminal device.

In a possible implementation of the first aspect, the ephemeris update indication information further includes at least one of ephemeris change precision, an ephemeris validity period, or ephemeris reference time, where the ephemeris change precision indicates an ephemeris change precision requirement of the terminal device, the ephemeris validity period includes an ephemeris validity period of the first satellite, and the ephemeris reference time includes time at which the ephemeris of the first satellite starts to be used. Alternatively, the ephemeris validity period includes a validity period of the ephemeris stored in the terminal device, and the ephemeris reference time includes time at which the ephemeris stored in the terminal device starts to be used. In this implementation, the first network element determines, based on the ephemeris update indication information, whether the ephemeris in the terminal device needs to be updated, so that ephemeris update accuracy can be improved, and unnecessary ephemeris update can be avoided.

Optionally, the ephemeris validity period may be a length of a time period starting from reference time, for example, being valid within one day starting from the reference time; or may be an ephemeris validity deadline.

Optionally, the ephemeris reference time may alternatively be another specific reference time point related to the ephemeris, for example, may be time at which the ephemeris is received or configured last time.

In a possible implementation of the first aspect, before that a first network element determines whether an ephemeris in a terminal device needs to be updated, the method further includes: The first network element sends a first request to a second network element, where the first request is used to request the updated ephemeris; and the first network element receives the first information from the second network element. In this implementation, if the ephemeris has changed, a network side can timely obtain a latest ephemeris without waiting for a request from the terminal device, so that the terminal device can timely and effectively obtain the updated ephemeris. This improves precision of an orbit or a satellite location predicted by the terminal device, reduces a delay of accessing a satellite cell by the terminal device, and improves communication efficiency and user experience.

Optionally, the first information may be included in a current message type as a new information element, or may be of a new message type, or in another form.

In a possible implementation of the first aspect, the first request includes one or more of the satellite identifier or the orbit identifier, the satellite identifier includes the identifier of the first satellite that serves the terminal device, and the orbit identifier includes the identifier of the orbit in which the first satellite that serves the terminal device is located.

In a possible implementation of the first aspect, that a first network element determines whether an ephemeris in a terminal device needs to be updated includes: The first network element determines, based on the ephemeris update indication information, whether the ephemeris in the terminal device needs to be updated.

In a possible implementation of the first aspect, that the first network element determines that the ephemeris in the terminal device needs to be updated includes: The first network element determines, based on the ephemeris change precision of the terminal device and the updated ephemeris, that a difference between the updated ephemeris and the ephemeris in the terminal device meets the ephemeris change precision requirement of the terminal device, where the ephemeris change precision indicates the ephemeris change precision requirement of the terminal device.

In a possible implementation of the first aspect, that the first network element determines that the ephemeris in the terminal device needs to be updated includes: The first network element determines, based on the ephemeris validity period of the terminal device and the updated ephemeris, that the ephemeris in the terminal device has exceeded the validity period, where the ephemeris validity period includes the ephemeris validity period of the first satellite that serves the terminal device.

In a possible implementation of the first aspect, that the first network element determines that the ephemeris in the terminal device needs to be updated includes: The first network element determines, based on the ephemeris reference time of the terminal device and the updated ephemeris, that the time at which the ephemeris in the terminal device starts to be used has changed, where the ephemeris reference time includes the time at which the ephemeris of the first satellite that serves the terminal device starts to be used.

In a possible implementation of the first aspect, the method further includes: The first network element determines the satellite identifier or the orbit identifier based on one or more of location information or a mobility pattern of the terminal device, where the satellite identifier includes the identifier of the first satellite that serves the terminal device, and the orbit identifier includes the identifier of the orbit in which the first satellite that serves the terminal device is located.

In a possible implementation of the first aspect, the first network element is an access and mobility management function network element.

In a possible implementation of the first aspect, the second network element is a satellite access network device, an application function network element, or a core network element.

In a possible implementation of the first aspect, the ephemeris includes one or more of a satellite level parameter or an orbital plane parameter.

According to a second aspect, a satellite ephemeris update method is provided. The method includes: A second network element determines whether an ephemeris of a satellite changes; and the second network element sends first information to a first network element, where the first information includes an updated ephemeris or indication information indicating that the ephemeris does not change. Optionally, the second network element may be a satellite access network device (for example, an SAT RAN), an application function network element (for example, an AF), or another core network element. The first network element may be an access and mobility management function network element (for example, an AMF), a capability exposure network element (for example, an NEF), or another core network element.

According to the satellite ephemeris update method provided in the second aspect, a network side can timely learn whether the ephemeris changes. If the ephemeris has changed, the network side can timely obtain a latest ephemeris after the change and timely notify a terminal device of ephemeris change information, so that the terminal device can timely and effectively obtain the updated ephemeris. This improves precision of an orbit or a satellite location predicted by the terminal device, reduces a delay of accessing a satellite cell by the terminal device, and improves communication efficiency and user experience.

Optionally, after receiving the first information, the first network element may notify the terminal device of the first information by using a downlink NAS message or other signaling, or may send the first information to the terminal device after the first network element sends ephemeris update indication information.

Optionally, if the change of the ephemeris still meets an ephemeris change precision requirement of the terminal device or the ephemeris does not change, the first network element may not send the indication information indicating that the ephemeris does not change to the terminal device. If the terminal device does not receive the indication information indicating that the ephemeris does not change or the updated ephemeris sent by the first network element, it is considered by default that the ephemeris does not change, and the first terminal device may continue to use a previous ephemeris to search for the satellite and access the satellite cell.

Optionally, the first information may be included in a current message type as a new information element, or may be of a new message type, or in another form.

In a possible implementation of the second aspect, the method further includes: The second network element receives a first request from the first network element, where the first request is used to request information about the updated ephemeris; and the second network element determines, based on the first request, the updated ephemeris or that the ephemeris does not change. In this implementation, the second network element does not need to actively track the change of the ephemeris. This reduces overheads and load of the second network element. In addition, when the ephemeris does not change or a change degree is small, the second network element does not need to send the first information. This can reduce signaling consumption.

Optionally, the first request may be included in a current message type as a new information element, or may be of a new message type, or in another form.

In a possible implementation of the second aspect, the first request includes one or more of a satellite identifier or an orbit identifier, the satellite identifier includes an identifier of a first satellite that serves the terminal device, and the orbit identifier includes an identifier of an orbit in which the first satellite that serves the terminal device is located.

In a possible implementation of the second aspect, the first request further includes at least one of ephemeris change precision, an ephemeris validity period, or ephemeris reference time, where the ephemeris change precision indicates an ephemeris change precision requirement of the terminal device, the ephemeris validity period includes an ephemeris validity period of the first satellite, and the ephemeris reference time includes time at which the ephemeris of the first satellite starts to be used.

In a possible implementation of the second aspect, if the first request includes the ephemeris change precision, that the second network element determines that an ephemeris of a satellite changes includes: The second network element determines, based on the ephemeris change precision and the updated ephemeris, that a difference between the updated ephemeris and the ephemeris before update meets the precision requirement.

In a possible implementation of the second aspect, if the first request includes the ephemeris validity period, that the second network element determines that an ephemeris of a satellite changes includes: The second network element determines, based on the ephemeris validity period and the updated ephemeris, that the ephemeris of the first satellite has exceeded the validity period.

In a possible implementation of the second aspect, if the first request includes the ephemeris reference time, that the second network element determines that an ephemeris of a satellite changes includes: The second network element determines, based on the ephemeris reference time and the updated ephemeris, that the time at which the ephemeris of the first satellite starts to be used has changed.

In a possible implementation of the second aspect, the second network element is a satellite access network device, and the method further includes: The satellite access network device determines, based on one or more of location information or a mobility pattern of the terminal device corresponding to the ephemeris of the satellite, a latest ephemeris of the first satellite that serves the terminal device, where the updated ephemeris includes the latest ephemeris of the first satellite that serves the terminal device, the satellite identifier includes the identifier of the first satellite that serves the terminal device, and the orbit identifier includes the identifier of the orbit in which the first satellite that serves the terminal device is located.

In a possible implementation of the second aspect, the first network element is an access and mobility management function network element or a capability exposure network element.

In a possible implementation of the second aspect, the second network element is an application function network element, the satellite access network device, or a core network element.

In a possible implementation of the second aspect, the ephemeris includes one or more of a satellite level parameter or an orbital plane parameter.

According to a third aspect, a communication apparatus is provided. The communication apparatus includes units configured to perform the steps according to any one of the first aspect or the possible implementations of the first aspect.

According to a fourth aspect, a communication apparatus is provided. The apparatus includes at least one processor and a memory, and the at least one processor is configured to perform the method according to any one of the second aspect or the possible implementations of the second aspect.

According to a fifth aspect, a communication apparatus is provided. The communication apparatus includes at least one processor and an interface circuit, and the at least one processor is configured to perform the method according to any one of the first aspect or the possible implementations of the first aspect. Optionally, the communication apparatus may be an AMF, an SMF, or another core network element.

According to a sixth aspect, a communication apparatus is provided. The communication apparatus includes at least one processor and an interface circuit, and the at least one processor is configured to perform the method according to any one of the second aspect or the possible implementations of the second aspect. Optionally, the communication apparatus may be a satellite access network device, an application function network element, or another core network element.

According to a seventh aspect, a core network device is provided. The core network device includes the communication apparatus provided in the third aspect or the fifth aspect. Optionally, the core network device may be an AMF, an SMF, another core network element, or the like.

According to an eighth aspect, a satellite access network device is provided. The satellite access network device includes the communication apparatus provided in the fourth aspect or the sixth aspect.

According to a ninth aspect, a communication system is provided. The communication system includes the communication apparatus provided in the third aspect, the fifth aspect, or the seventh aspect, and the communication apparatus provided in the fourth aspect, the sixth aspect, or the eighth aspect. Optionally, the communication system further includes a terminal device.

According to a tenth aspect, a computer program product is provided. The computer program product includes a computer program. When being executed by a processor, the computer program is used to perform the method according to any one of the first aspect or the possible implementations of the first aspect, or is used to perform the method according to any one of the second aspect or the possible implementations of the second aspect.

According to an eleventh aspect, a computer-readable storage medium is provided. The computer-readable storage medium stores a computer program. When being executed, the computer program is used to perform the method according to any one of the first aspect or the possible implementations of the first aspect, or perform the method according to any one of the second aspect or the possible implementations of the second aspect.

According to a twelfth aspect, a chip or an integrated circuit is provided. The chip or the integrated circuit includes: a processor, configured to invoke a computer program from a memory and run the computer program, so that a device in which the chip or the integrated circuit is installed performs the method according to any one of the first aspect or the possible implementations of the first aspect, or performs the method according to any one of the second aspect or the possible implementations of the second aspect.

According to the satellite ephemeris update method and the communication apparatus provided in embodiments of this application, the network side timely notifies the terminal device of the ephemeris update information, so that the terminal device can timely and effectively obtain the updated ephemeris. This improves the precision of the orbit or the satellite location predicted by the terminal device, reduces the delay of accessing the satellite cell by the terminal device, and improves communication efficiency and user experience.

## BRIEF DESCRIPTION OF DRAWINGS

FIG. 1 is a schematic block diagram of a wireless communication system architecture to which an embodiment of this application is applicable;
FIG. 2 is a schematic diagram of physical meanings represented by a part of satellite ephemeris parameters;
FIG. 3 is a schematic interaction diagram of a satellite ephemeris update method according to an embodiment of this application;
FIG. 4 is a schematic interaction diagram of a satellite ephemeris update method according to another embodiment of this application;
FIG. 5 is a schematic interaction diagram of a satellite ephemeris update method according to still another embodiment of this application;
FIG. 6 is a schematic interaction diagram of a satellite ephemeris update method according to yet another embodiment of this application;
FIG. 7 is a schematic interaction diagram of a satellite ephemeris update method according to still yet another embodiment of this application;
FIG. 8 is a schematic interaction diagram of a satellite ephemeris update method according to a further embodiment of this application;
FIG. 9 is a schematic block diagram of a structure of a communication apparatus according to an embodiment of this application;
FIG. 10 is a schematic block diagram of a structure of another communication apparatus according to an embodiment of this application;
FIG. 11 is a schematic block diagram of a structure of still another communication apparatus according to an embodiment of this application;
FIG. 12 is a schematic block diagram of a structure of yet another communication apparatus according to an embodiment of this application; and
FIG. 13 is a schematic block diagram of a structure of a satellite access network device according to an embodiment of this application.

## DESCRIPTION OF EMBODIMENTS

The following describes the technical solutions of this application with reference to accompanying drawings.

In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry instructions and/or data.

The technical solutions in embodiments of this application may be applied to various communication systems, for example, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a 5th generation (5th Generation, 5G) system, or a new radio (New Radio, NR) system. This is not limited in embodiments of this application.

The terminal device in embodiments of this application may also be referred to as user equipment, an access terminal, a subscriber unit, a subscriber station, a mobile station, a remote station, a remote terminal, a mobile device, a user terminal, a terminal, a wireless communication device, a user agent, a user apparatus, or the like. The terminal device may alternatively be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a future 5G network, a terminal device in a future evolved public land mobile network (Public Land Mobile Network, PLMN), or the like. This is not limited in embodiments of this application.

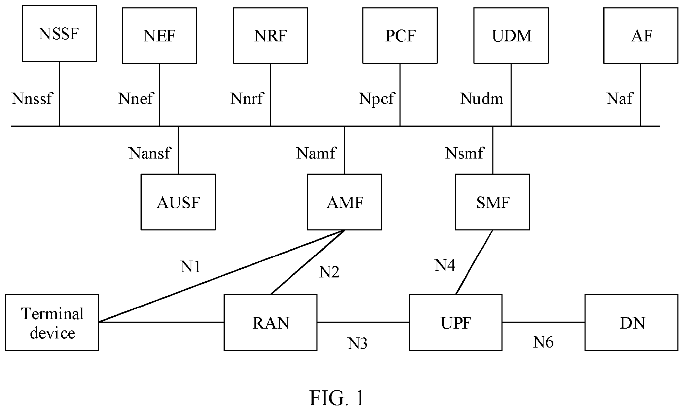

FIG. 1 is a schematic block diagram of a wireless communication system architecture to which an embodiment of this application is applicable. As shown in FIG. 1, the system architecture includes a terminal device, a radio access network device (Radio Access Network, RAN), a core network device, and a data network (data network, DN). The system architecture is represented in a form of a service-based (service-based) interface. The terminal device in FIG. 1 may be configured to connect, through a radio air interface, to the radio access network device deployed by an operator, and then connect to a data network through the core network device. The radio access network device is mainly configured to implement functions such as a radio physical layer function, resource scheduling, radio resource management, radio access control, and mobility management. The core network device (which may also be referred to as a management device) is mainly configured to perform device registration, security authentication, mobility management, location management, and the like of the terminal device. It should be noted that, FIG. 1 is merely an example diagram of the architecture. The network architecture may further include other function units or function network elements, in addition to the function units shown in FIG. 1. This is not limited in embodiments of this application.

The terminal device shown in FIG. 1 may be any one of the foregoing possible terminal devices. For example, the terminal device may be a mobile phone or a computer, or may be a cellular phone, a cordless phone, a session initiation protocol (session initiation protocol, SIP) phone, a smartphone, a wireless local loop (wireless local loop, WLL) station, a personal digital assistant (personal digital assistant, PDA), a computer, a laptop computer, a handheld communication device, a handheld computing device, a satellite wireless device, a wireless modem card, or a television set-top box (set top box, STB), a customer premises equipment (customer premise equipment, CPE), and/or another device configured to perform communication in a wireless system. The radio access network device may be an access network (access network, AN)/radio access network (radio access network, RAN) device or a network including a plurality of 5G-AN/5G-RAN nodes. The 5G-AN/5G-RAN node may be an access node (access point, AP), a next generation NodeB (NR NodeB, gNB), a gNB in which a central unit (central unit, CU) is separated from a distributed unit (distributed unit, DU), a transmission reception point (transmission reception point, TRP), a transmission point (transmission point, TP), or another specific access node.

As shown in FIG. 1, the core network device may include a unified data management (unified data management, UDM) network element, an access and mobility management function (access and mobility function, AMF) network element, a session management function (session management function, SMF) network element, a policy control function (policy control function, PCF) network element, an application function (application function, AF) network element, a user plane function (user plane function, UPF) network element, a network exposure function (Network Exposure Function, NEF) network element, a network repository function (Network Repository Function, NRF) network element, a network slice selection function (Network Slice Selection function, NSSF) network element, an authentication server function (Authentication Server Function, AUSF) network element, or the like. These function units may work independently, or may be combined together to implement some control functions. For example, the AMF, the SMF, and the PCF may be combined together as a management device to implement access control and mobility management functions such as access authentication, security encryption, and location registration of the terminal device, session management functions such as establishment, release, and change of a user plane transmission path, and functions of analyzing some slice (slice) related data (such as congestion) and terminal device related data.

In the 5G network shown in FIG. 1, a connection may be established between function units through a next generation (next generation, NG) interface to implement communication. For example, the terminal device establishes an air interface connection to a RAN device through a new radio (new radio, NR) interface, to transmit user plane data and control plane signaling. The terminal device may establish a control plane signaling connection to the AMF through an NG interface 1 (N1 for short). The RAN device may establish a user plane data connection to an offloading point UPF through an NG interface 3 (N3 for short). The RAN device may establish a control plane signaling connection to the AMF through an NG interface 2 (N2 for short). The UPF may exchange user plane data with the data network through an NG interface 6 (N6 for short). Each core network element may communicate with another core network element through a corresponding interface. For example, the another core network element may communicate with the NSSF through an Nnssf interface, and the another core network element may communicate with the NEF through an Nnef interface.

It should be noted that, FIG. 1 is merely an example diagram of the architecture. The network architecture may further include other function units or function network elements, in addition to the function units shown in FIG. 1. This is not limited in embodiments of this application.

It should be understood that a name of an interface between network elements in this application is merely an example, and the interface between the network elements may have another name. The name of the interface is not limited in embodiments of this application.

It should be further understood that the radio access network device in embodiments of this application may be a device configured to communicate with the terminal apparatus and the core network device. The radio access network device may be a base transceiver station (base transceiver station, BTS) in a global system for mobile communications (global system for mobile communications, GSM) system or a code division multiple access (code division multiple access, CDMA) system, or may be a NodeB (NodeB, NB) in a wideband code division multiple access (wideband code division multiple access, WCDMA) system, or may be an evolved NodeB (evolved NodeB, eNB or eNodeB) in an LTE system, or may be a radio controller in a cloud radio access network (cloud radio access network, CRAN) scenario. Alternatively, the access network device may be a relay station, an access point, a vehicle-mounted device, a wearable device, a network device in a 5G network, an access network device in a future evolved PLMN network, or the like. This is not limited in embodiments of this application.

It should be further understood that, in embodiments of this application, for example, in the architecture shown in FIG. 1, the radio access network device may also be referred to as a radio satellite access network station (or a radio satellite access network device or a radio satellite access network), a satellite access network station (or a satellite access network device or a satellite access network), or a satellite network station (or a satellite network device or a satellite network). This is not limited in embodiments of this application. The satellite access network may be deployed in a plurality of manners. For example, a same PLMN has both a terrestrial 3GPP access network and a satellite 3GPP access network, and the two access networks each have independent interfaces with a core network. For another example, different core networks share a same satellite access network, and the shared satellite access network includes an available PLMN in broadcast system information. For still another example, a terrestrial access network and the satellite access network are independent, to be specific, the terrestrial access network and the satellite access network correspond to independent PLMNs. For yet another example, a satellite in the sky is only responsible for signal transmission, and does not have a function of the access network. In this scenario, satellite access may also be referred to as satellite backhaul. In the foregoing non-satellite backhaul scenario, a satellite may include all or a part of functions of the access network. This is not limited in this application. When all functions of a base station are integrated into the satellite, the satellite access network device may be understood as a device with a part of functions of the base station on the satellite, and all signaling and data processing related to the access network are performed on the satellite. When one part of functions of a base station are integrated into the satellite, and the other part of functions are located on the ground, the satellite access network device may be understood as a device with the part of functions of the base station on the satellite and a device with the part of functions of the base station on the ground, and one part of signaling and data processing related to the access network are performed on the satellite and the other part is performed on the ground. During satellite backhaul, the satellite access network device may be understood as a base station on the ground, signaling and data processing related to the access network are all performed on the ground, and the satellite transparently transmits signaling and data between the terminal device and the satellite access network.

In embodiments of this application, base stations in satellite communication may be collectively referred to as a satellite access network device (satellite radio access network, SAT RAN).

Currently, as satellite technologies gradually mature, there are thousands of satellites. As a quantity of satellites increases, precision, breadth, and the like of satellite coverage are greatly improved, thereby laying a foundation for wide use of satellite communication. Therefore, standards organizations such as the 3rd Generation Partnership Project (3rd Generation Partnership Project, 3GPP) have started research on satellite communication, and the 3GPP has discussed and studied standardization of satellite communication since Release 15.

Satellites can be divided into synchronous satellites and non-synchronous satellites based on altitudes of satellite orbits. An altitude of the synchronous satellite is 35786 km. Advantages of the synchronous satellite are that the satellite moves at a same speed as that of the earth and coverage is large. In addition, the coverage does not move with time. A disadvantage is that a communication delay is high due to a high altitude. An altitude of the asynchronous satellite ranges from 500 km to 45000 km. Orbits of the asynchronous satellite can be further divided into low, medium, and high orbits. An advantage of the asynchronous satellite is that a delay of the asynchronous satellite is lower than that of the synchronous satellite. Disadvantages of the asynchronous satellite are that coverage of the asynchronous satellite is smaller than that of the synchronous satellite and the coverage moves with time. Although movement of the asynchronous satellite complicates management, a signal delay of the asynchronous satellite is low. Therefore, many satellite communication providers choose the asynchronous satellite for satellite communication.

Before successfully accessing a network, the terminal device needs to search for an available network. A difference from coverage of a terrestrial radio base station is that a visible antenna angle of a satellite cell covered by the satellite is much narrower than that of a terrestrial cell, and the satellite keeps moving. These all increase difficulty of accessing the satellite cell by the terminal device by searching for the satellite network. If the terminal device directly blindly searches for the satellite cell without location information of the satellite, it may take several hours to successfully find the network. This severely affects user experience.

An ephemeris (Ephemeris) may also be referred to as an ephemeris table, a calendar, an almanac, or the like, and is information used to locate a location of a celestial body at any moment. To resolve the foregoing problem, the 3GPP RAN working group introduces satellite ephemeris data (which may alternatively be a satellite ephemeris parameter) at the RAN2#108 meeting. The terminal device may search for a network based on the satellite ephemeris data, to improve user experience. Basic elements (parameters) included in the satellite ephemeris determined at the RAN2#108 meeting are shown in Table 1 below:

Table 1

| Orbital plane parameters (Orbital plane parameters) | $\sqrt{a}$ | Square root of semi-major axis (Square root of semi-major axis (semi-major axis)) |
|---|---|---|
| | e | Eccentricity (Eccentricity) |
| | $i_0$ | Inclination angle at reference time (Inclination angle at reference time (inclination)) |
| | $\Omega_0$ | Longitude of ascending node of orbit plane (Longitude of ascending node of orbit plane (right ascension of the ascending node)) |
| | $\omega$ | Argument of perigee (Argument of perigee (argument of periapsis)) |
| Satellite level parameters (Satellite level parameters) | Mo | Mean anomaly at reference time (Mean anomaly at reference time (true anomaly and a reference point in time)) |
| | $T_{0e}$ | Epoch (the epoch) |

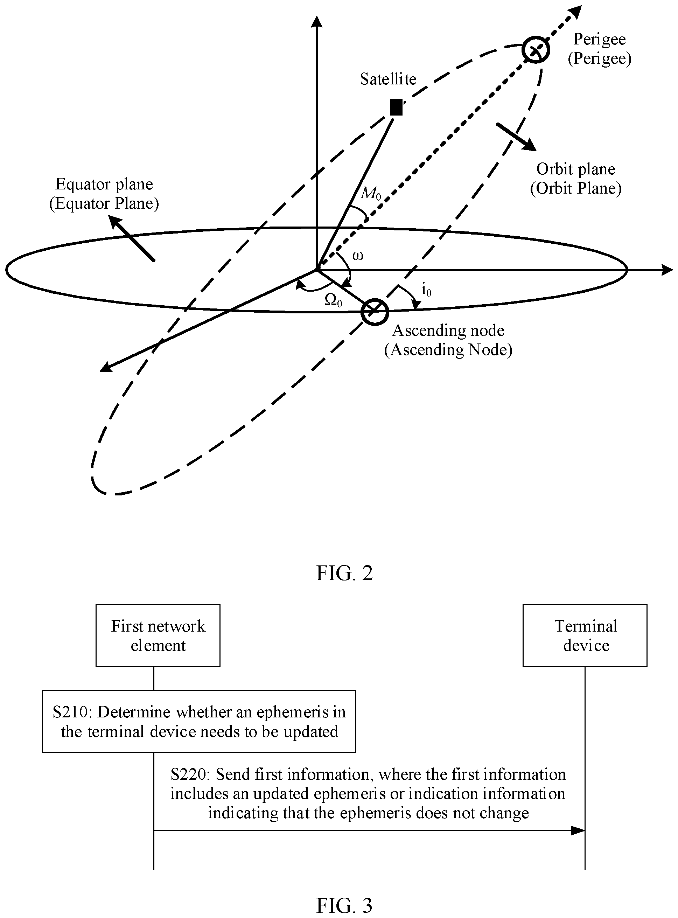

FIG. 2 is a schematic diagram of physical meanings represented by a part of satellite ephemeris parameters. In FIG. 2, the ascending node refers to an intersection point between the satellite and the earth's equator plane when the satellite passes through the earth's equator plane from south to north. The argument of perigee refers to an angle from the ascending node to a perigee in a satellite orbital plane according to a satellite running direction, and a value of the argument of perigee is a number ranging from 0 to 360 degrees.

It should be understood that Table 1 is merely an example for describing some specific parameters that may be included in the satellite ephemeris parameters. In embodiments of this application, the satellite ephemeris parameters may not include one or more of the foregoing parameters, or may include another type of parameter. Specific content of the satellite ephemeris parameters is not limited in embodiments of this application.

It should be further understood that, in embodiments of this application, the satellite ephemeris may also be referred to as an ephemeris parameter, an ephemeris parameter of a satellite, an ephemeris parameter of a satellite in a satellite access network, an ephemeris parameter of a satellite in satellite backhaul, or another possible name. This is not limited in this application.

In a scenario in which there are many satellites, ephemeris parameters occupy large space. Therefore, the ephemeris is generally configured in a preconfiguration mode. Currently, the ephemeris is preconfigured in either of the following modes:

In the first mode, parameters of all orbits and all satellites that may serve the terminal device are preconfigured in the terminal device. The terminal device may predict a location of a satellite based on this, search for a satellite network, and access a satellite cell.

In the second mode, orbit parameters of all orbits that may serve the terminal device are preconfigured in the terminal device. The terminal device searches for a cell in an orbit range. A satellite in the orbit broadcasts a satellite parameter, and the terminal device predicts a location of the satellite based on the satellite parameter, and accesses a network.

With change of time, the ephemeris of the satellite that serves the terminal device may change. When the satellite ephemeris changes, there are two possible update modes currently. 1. The update is performed on the terminal through an application layer. This mode depends on an application, has low reliability and weak timeliness, and may expose a location, a capability, or the like of the terminal to a third party. 2. An updated parameter is broadcast through the access network. However, because a size of broadcast signaling in the access network is limited, and satellite ephemeris data of a single satellite may be limited, the single satellite may need to perform broadcasting for a plurality of times, or a plurality of satellites may need to perform independent broadcasting. This results in large signaling consumption and untimely broadcasting. Neither of the foregoing two modes can timely and effectively update the satellite ephemeris. When the satellite ephemeris changes, the terminal device cannot timely and effectively obtain an updated ephemeris. Consequently, precision of an orbit or a satellite location predicted by the terminal device is reduced, and the terminal device needs longer time to successfully access a satellite cell. This increases a communication delay of the terminal device, reduces communication efficiency, and affects user experience.

In view of this, this application provides a satellite ephemeris update method, to timely notify the terminal device of ephemeris update information, so that the terminal device can timely and effectively obtain the updated ephemeris. This improves the precision of the orbit or the satellite location predicted by the terminal device, reduces the delay of accessing the satellite cell by the terminal device, and improves communication efficiency and user experience.

The following describes in detail the satellite ephemeris update method provided in this application with reference to FIG. 3. FIG. 3 is a schematic flowchart of a satellite ephemeris update method 200 according to an embodiment of this application. As shown in FIG. 3, the method 200 may include S210 and S220.

S210: A first network element determines whether an ephemeris in a terminal device needs to be updated.

S220: The first network element sends first information to the terminal device, where the first information includes an updated ephemeris or indication information indicating that the ephemeris does not change.

In S210, the first network element determines whether the ephemeris in the terminal device needs to be updated. In this embodiment of this application, the ephemeris in the terminal device may be understood as one or more of an ephemeris of a satellite that currently serves the terminal device in a satellite access network or an ephemeris of a satellite that is to serve the terminal device in the satellite access network. The ephemeris may include an ephemeris corresponding to one or more satellites. For example, the ephemeris may include one or more orbital plane parameters (Orbital plane parameters), one or more satellite level parameters (Satellite level parameters), and/or the like. For the orbital plane parameters and/or the satellite level parameters, refer to descriptions in Table 1. Alternatively, in other words, in this embodiment of this application, the ephemeris may include an ephemeris of one or more satellites, and/or ephemerides of all satellites in one or more orbits, or the ephemeris may be a whole and even include an ephemeris of an entire satellite system. In this embodiment of this application, the ephemeris may include one or more of a satellite level ephemeris or an orbit level ephemeris. The ephemeris in the terminal device may alternatively be understood as an ephemeris stored in the terminal device.

In this embodiment of this application, the first network element may be a core network element. For example, the first network element may be an AMF, an SMF, or the like. A specific form of the first network element is not limited in this embodiment of this application. In S210, the first network element determines whether the ephemeris in the terminal device needs to be updated. For example, the AMF may determine a satellite identifier or an orbit identifier based on one or more of a location or a mobility pattern (Mobility Pattern) of the terminal device. The satellite herein includes the one or more of the satellite that currently serves the terminal device or the satellite that is to serve the terminal device. Then, based on a parameter included in a locally stored ephemeris, for example, ephemeris change precision (which may also be referred to as ephemeris precision), ephemeris reference time, or an ephemeris validity period, the AMF compares the ephemeris in the terminal device with an ephemeris of a satellite indicated by the determined satellite identifier or orbit identifier. For example, the AMF determines that the ephemeris in the terminal device needs to be updated when the precision change of the ephemeris exceeds a requirement, the ephemeris precision cannot meet a requirement, the ephemeris validity period has expired, the ephemeris reference time has changed, and so on. The ephemeris change precision indicates an ephemeris change precision requirement of the terminal device. The ephemeris validity period indicates a time condition of the ephemeris used by the terminal device, and is a time length or a time period. If the time period is exceeded, it indicates that the ephemeris validity period has expired, and the ephemeris cannot continue to be used or an error caused for using the ephemeris is large. The ephemeris reference time indicates a time period in which the ephemeris starts to be used, and is a time point. Optionally, the ephemeris reference time may be the same as start time of the ephemeris validity period.

After determining whether the ephemeris in the terminal device needs to be updated, in S220, the first network element sends the first information to the terminal device, where the first information includes the updated ephemeris or the indication information indicating that the ephemeris does not change. Optionally, the first information may be any type of downlink NAS information. If the first information includes the updated ephemeris, the terminal device may search for the satellite based on the updated ephemeris and access a satellite cell. If the first information includes the indication information indicating that the ephemeris does not change, the first terminal device may continue to use a previous ephemeris to search for the satellite and access the satellite cell.

Optionally, in S220, the first network element may directly send the first information to the terminal device by using a downlink NAS message, for example, a terminal device configuration update message. If the ephemeris validity period of the terminal device is about to expire (which may be determined based on a threshold and a transmission delay), the first information is sent by using the terminal device configuration update message. Alternatively, after the terminal device sends an uplink NAS message, the first network element may send, to the terminal device by using a downlink NAS message, the updated ephemeris or the indication information indicating that the ephemeris does not change. This is not limited herein in this embodiment of this application.

Optionally, in S220, the first network element may send the first information to the terminal device in another downlink signaling manner. For example, the first network element sends the first information to an access network, and the access network then sends the first information to the terminal device. A manner in which the first network element sends the first information to the terminal device is not limited in this embodiment of this application.

According to the satellite ephemeris update method provided in this application, the terminal device is notified of an ephemeris update status in a non-access stratum (non-access stratum, NAS) manner. If the ephemeris has changed, a core network side (or the core network element) can timely obtain a latest ephemeris without waiting for a request from the terminal device, so that the terminal device can timely and effectively obtain the updated ephemeris. This improves precision of an orbit or a satellite location predicted by the terminal device, reduces a delay of accessing the satellite cell by the terminal device, and improves communication efficiency and user experience.

Optionally, if the change of the ephemeris still meets an ephemeris change precision requirement of the terminal device or the ephemeris does not change, the first network element may not send the indication information indicating that the ephemeris does not change to the terminal device. If the terminal device does not receive the indication information indicating that the ephemeris does not change or the updated ephemeris sent by the first network element, it is considered by default that the ephemeris does not change, and the first terminal device may continue to use the previous ephemeris to search for the satellite and access the satellite cell.

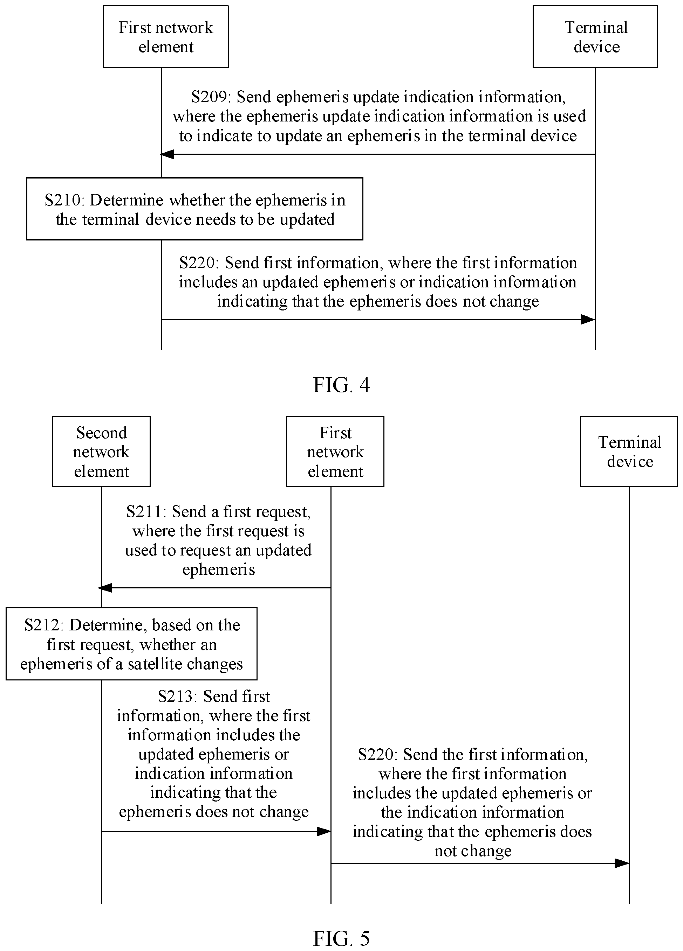

In some possible implementations of this application, FIG. 4 is a schematic flowchart of a satellite ephemeris update method according to some embodiments of this application. Based on the method steps shown in FIG. 3, the method 200 further includes S209.

S209: The first network element receives ephemeris update indication information from the terminal device, to be specific, the terminal device sends the ephemeris update indication information to the first network element, where the ephemeris update indication information is used to indicate to update the ephemeris in the terminal device.

For steps S210 and S220 shown in FIG. 4, refer to the foregoing related descriptions of S210 and S220. For brevity, details are not described herein again.

In S209, the terminal device may actively send the ephemeris update indication information to the core network element (the first network element). For example, the ephemeris update indication information may be carried in any uplink NAS message or other possible signaling. For example, the terminal device first sends the ephemeris update indication information to a satellite access network device, and then the satellite access network device sends the ephemeris update indication information to the first network element. A manner in which the terminal device sends the ephemeris update indication information to the first network element is not limited in this embodiment of this application.

Optionally, the terminal device may send the ephemeris update indication information to the first network element in the following cases:

In the first case, the terminal device is in a connected state, to be specific, the terminal device is still connected to a current SAT RAN, and the ephemeris validity period of the terminal device has expired. To prevent difficulty in network search caused by the change of the ephemeris when the terminal device enters an idle state next time, the change of the ephemeris needs to be initiated. Therefore, the terminal device may send a mobility registration request, a service request, or other possible uplink signaling to carry the ephemeris update indication information.

In the second case, the terminal device is in a connected state, and the ephemeris validity period of the terminal device has not expired. However, the terminal device moves out of a registration area delivered by a network side during previous registration. To prevent difficulty in network search caused by orbit or satellite switching that may occur when the terminal device enters an idle state next time, the change of the ephemeris needs to be initiated. In this case, the terminal device generally initiates mobility registration, and a mobility registration request may include the ephemeris update indication information.

In the third case, the terminal device is initially registered with a network, and a network side may need to send the latest ephemeris to the terminal device. Therefore, the terminal device needs to initiate ephemeris update. For example, the ephemeris update indication information may be carried in an initial registration request.

In the fourth case, the terminal device is in an idle state, and the ephemeris validity period of the terminal device is about to expire. To prevent an idle state from expiring, the terminal device, in this case, actively initiates the ephemeris update. In this case, the terminal device may send the ephemeris update indication information by using an initial NAS message or other uplink signaling.

It should be understood that the foregoing several cases are merely examples for describing several scenarios in which the terminal device may send the ephemeris update indication information, and should not constitute any limitation on this application. In this embodiment of this application, the terminal device may alternatively send the ephemeris update indication information to the core network element in another case. This is not limited herein in this embodiment of this application.

Optionally, in this embodiment of this application, in the following four scenarios, the uplink NAS message sent by the terminal device to the first network element (for example, the AMF) may not include the foregoing ephemeris update indication.

In the first scenario, the uplink NAS message itself includes a purpose of requesting a network to send the latest ephemeris to the terminal device.

In the second scenario, the terminal device sends an initial NAS message when entering the connected state from the idle state. In this scenario, the first network element provides latest ephemeris data for the terminal device because the first network element is configured in advance to provide the latest ephemeris data for the terminal device in this scenario. For example, the terminal device is initially registered with the network.

In the third scenario, the terminal device is in a mobility registration scenario. In this scenario, the first network element provides latest ephemeris data for the terminal because the first network element is configured in advance to provide the latest ephemeris data for the terminal device in this scenario.

In the fourth scenario, another possible scenario in which it is difficult for the terminal device to perform network search next time, or the like is provided.

After receiving the ephemeris update indication information, the first network element may determine, based on the ephemeris update indication information, whether the ephemeris in the terminal device needs to be updated.

According to the ephemeris update method provided in this application, the terminal device sends the ephemeris update indication information to the first network element, and the first network element (for example, the AMF) determines, based on the ephemeris update indication information, whether the ephemeris changes. The first network element does not need to actively track the change of the ephemeris. This reduces overheads and load of the first network element. In addition, the terminal device can timely obtain the latest ephemeris by using the connected state; and when the ephemeris does not change or a change degree is small, the first network element does not need to send the ephemeris update indication information. This reduces signaling consumption.

Optionally, in a possible implementation, the ephemeris update indication information includes one or more satellite identifiers and/or one or more orbit identifiers. One satellite identifier is used to uniquely identify one satellite, and one orbit identifier is used to uniquely identify one orbit. In this embodiment of this application, a first satellite may include one or more satellites. For example, the first satellite that serves the terminal device includes one or more of a satellite that currently serves the terminal device or a satellite that is to serve the terminal device. The satellite identifier includes an identifier of the first satellite that serves the terminal device, the orbit identifier includes an identifier of an orbit in which the first satellite is located, and the orbit in which the first satellite is located may be one or more orbits. Therefore, in this embodiment of this application, the ephemeris may include an ephemeris of a satellite identified by one or more satellite identifiers, and/or ephemerides of all satellites in an orbit identified by one or more orbit identifiers. Alternatively, the ephemeris may be an ephemeris of an entire satellite system.

It should be understood that, in this embodiment of this application, the ephemeris of the first satellite may be understood as ephemerides of all satellites in one or more orbits, or may be understood as an ephemeris of one or more satellites, or may be understood as an ephemeris of an entire satellite system. To be specific, the ephemeris of the first satellite may be a whole. Optionally, in this application, the ephemeris of the first satellite may also be referred to as an ephemeris stored in the terminal device. Therefore, the satellite identifier in the ephemeris update indication information may include one or more satellite identifiers. Because the satellite that currently serves the terminal device and/or the satellite that is to serve the terminal device may exist in one or more orbits, the orbit identifier in the ephemeris update indication information may include one or more orbit identifiers.

Optionally, in a possible implementation, the ephemeris update indication information further includes at least one of the ephemeris change precision, the ephemeris validity period, or the ephemeris reference time, where the ephemeris change precision indicates the ephemeris change precision requirement of the terminal device, the ephemeris validity period includes a validity period of the satellite stored in the terminal device, and the ephemeris reference time includes time at which the ephemeris stored in the terminal device starts to be used. The ephemeris stored in the terminal device may be understood as ephemerides of all satellites in one or more orbits, or may be understood as an ephemeris of one or more satellites, or may be understood as an ephemeris of an entire satellite system.

For example, the ephemeris change precision may include the following content:

1. Precision type, for example, high precision, medium precision, and low precision. Each precision type may be predefined in a protocol, or a change range of each parameter in the ephemeris may be agreed on between the terminal device and the first network element (for example, the AMF).

2. Overall precision range value. For example, only one change range value (which, for example, may be in a form of a percentage) is used to indicate the ephemeris precision. In other words, if change of any parameter in an old ephemeris exceeds the precision range value, it indicates that the old ephemeris no longer meets a precision requirement. In this embodiment of this application, the old ephemeris may be understood as the satellite ephemeris stored in the terminal device.

3. Precision range value of one or more parameters. For example, a change range of an inclination angle does not exceed 1 degree, and a change range of the right ascension of the ascending node does not exceed 1.5 degrees. For another example, only a precision range value of one parameter in the ephemeris may be provided, or precision range values of a plurality of parameters or all parameters may be provided.

It should be understood that the ephemeris change precision may alternatively be reflected in another manner, for example, an upper limit range and a lower limit range of a parameter value. This is not limited in this embodiment of this application.

It should be understood that the ephemeris validity period may be a length of a time period starting from reference time, for example, being valid within one day starting from the reference time; or may be an ephemeris validity deadline, for example, being valid before January 1, 2021; or may be reflected in another manner. This is not limited herein in this embodiment of this application.

It should be further understood that the ephemeris reference time may alternatively be another specific reference time point related to the ephemeris, for example, may be time at which the ephemeris is received or configured last time. This is not limited herein in this embodiment of this application.

Optionally, in S220, the first network element may determine, based on the ephemeris update indication information, whether the ephemeris in the terminal device needs to be updated.

In a possible implementation, if the ephemeris update indication information includes one or more of the satellite identifier or the orbit identifier and includes the ephemeris reference time, after determining the ephemeris reference time, the first network element determines that the ephemeris in the terminal device needs to be updated if determining that the time at which the ephemeris in the terminal device starts to be used has changed. In other words, if reference time of the updated ephemeris and the reference time of the ephemeris in the terminal device are greater than or equal to a preset or predefined threshold, it is determined that the ephemeris in the terminal device needs to be updated. Further, the first network element determines whether an ephemeris of a related orbit and/or satellite has changed. The related orbit herein may be an orbit identified by the orbit identifier included in the ephemeris update indication information. The related satellite may be a satellite identified by the satellite identifier included in the ephemeris update indication information. If the ephemeris changes, the first information includes information about the latest ephemeris. If the ephemeris does not change, the first information indicates that the ephemeris does not change. Alternatively, if an ephemeris of one part of orbits or satellites changes and an ephemeris of the other part of orbits or satellites does not change, the first information includes ephemeris information of the changed part, and may also include an indication of the unchanged part.

In another possible implementation, if the ephemeris update indication information does not include one or more of the satellite identifier or the orbit identifier, but includes the ephemeris reference time, the first network element may obtain the orbit identifier and/or the satellite identifier in the following manners:

In the first manner, the terminal device provides one or more of the orbit identifier or the satellite identifier. In the second manner, the first network element (for example, the AMF) adds, based on the one or more of the orbit identifier or the satellite identifier provided by the terminal device, and a location, a mobility pattern, or the like of the terminal device, an additional orbit identifier and/or satellite identifier to the orbit identifier and/or the satellite identifier provided by the terminal device. In the third manner, if the terminal device does not provide the orbit identifier or the satellite identifier, the first network element (for example, the AMF) determines, based on a location, a mobility pattern, or the like of the terminal device, the orbit identifier or the satellite identifier that need/needs to be queried. In the fourth manner, the first network element (for example, the AMF) determines, based on another possible source such as an operator configuration or another network element, the orbit identifier and/or the satellite identifier that need/needs to be queried.

The satellite identifier includes the identifier of the first satellite that currently serves the terminal device or that may serve the terminal device in the future, and the orbit identifier includes the identifier of the orbit in which the first satellite that currently serves the terminal device or that may serve the terminal device in the future is located. Further, if the first network element determines, based on the satellite identifier and/or the orbit identifier and the ephemeris reference time, that the time at which the ephemeris in the terminal device starts to be used has changed, the first network element determines that the ephemeris in the terminal device needs to be updated. If the ephemeris changes, the first information includes information about the latest ephemeris. If the ephemeris does not change, the first information indicates that the ephemeris does not change. Alternatively, if an ephemeris of one part of orbits or satellites changes and an ephemeris of the other part of orbits or satellites does not change, the first information includes ephemeris information of the changed part, and may also include an ephemeris indication of the unchanged part.

In another possible implementation, if the ephemeris update indication information includes one or more of the satellite identifier or the orbit identifier and includes the ephemeris change precision, the first network element determines that the ephemeris in the terminal device needs to be updated if determining that a change degree of the ephemeris is greater than or equal to a preset or predefined threshold. For example, if a change amount of a value of a parameter in the ephemeris is 2, and the ephemeris change precision requirement is 1, the ephemeris needs to be changed. In other words, a variance (or a difference) between the updated ephemeris and the ephemeris in the terminal device meets the ephemeris change precision requirement of the terminal device, and the first information includes the updated ephemeris. In this case, the first network element may determine a current ephemeris in the terminal device based on locally stored information.

In another possible implementation, if the ephemeris update indication information includes one or more of the satellite identifier or the orbit identifier and includes the ephemeris validity period of the terminal device, the first network element determines that the ephemeris in the terminal device needs to be updated if determining that the ephemeris in the terminal device has exceeded the validity period.

In another possible implementation, if the ephemeris update indication information does not include one or more of the satellite identifier, the orbit identifier, the ephemeris change precision, the ephemeris validity period, or the ephemeris reference time, after receiving the ephemeris update indication information, the first network element sends the latest ephemeris to the terminal device if determining, based on locally stored information, that the current latest ephemeris has changed, compared with an ephemeris sent to the terminal device last time. If the ephemeris update indication information does not include the satellite identifier and/or the orbit identifier, the satellite and/or the orbit related to the ephemeris may be determined by the first network element based on location information or the mobility pattern of the terminal device.

It should be understood that, in any one of the foregoing possible implementations, if the ephemeris changes and a change size exceeds a precision information requirement, the first information includes the information about the latest ephemeris, and a validity period of the latest ephemeris may be provided based on an ephemeris change rule and/or the ephemeris change precision. If the ephemeris changes and a change size does not exceed a precision requirement, in addition to including indication information indicating that the ephemeris changes but the precision still meets the requirement, the first information may provide a validity period of the old ephemeris (where the old ephemeris may be understood as the ephemeris of the satellite that currently serves the terminal device) based on an ephemeris change rule and/or ephemeris change precision information, or may provide a new ephemeris and a validity period thereof. If the ephemeris changes and a change size does not exceed a precision requirement, the first information may include reference time of the old ephemeris in addition to the foregoing information. The reference time of the old ephemeris may be included in the latest ephemeris, or may be provided independently of the latest ephemeris. If the ephemeris does not change, the first information includes the indication information indicating that the ephemeris does not change, and may further include an updated validity period of the old ephemeris.

It should be understood that the foregoing several implementations are merely examples of several implementations in which the first network element determines whether the ephemeris changes, and should not constitute any limitation on this application. In this embodiment of this application, the first network element may alternatively determine, in another implementation, whether the ephemeris changes. For example, after receiving ephemeris change indication information, the first network element considers that the terminal device sends the ephemeris update indication to the terminal device only after determining that the ephemeris changes. Therefore, the first network element determines that the ephemeris changes provided that the ephemeris update indication information is received, and directly sends the latest ephemeris to the terminal device after receiving the ephemeris change indication. This is not limited herein in this embodiment of this application.

In this embodiment of this application, the first network element determines, based on the ephemeris update indication information, whether the ephemeris in the terminal device needs to be updated, so that ephemeris update accuracy can be improved, and unnecessary ephemeris update can be avoided.

If the first network element has the latest ephemeris, the first network element may determine by itself whether the ephemeris in the terminal device needs to be updated, and send the first information to the terminal device. If the first network element does not have the latest ephemeris, the latest ephemeris may be obtained in some other possible implementations of this application. FIG. 5 is a schematic flowchart of a satellite ephemeris update method according to some embodiments of this application. Based on the method steps shown in FIG. 3, S210 in the method 200 includes S211, S212, and S213.

S211: The first network element sends a first request to a second network element, where the first request is used to request the updated ephemeris. Optionally, the first request may be included in a current message type as a new information element, or may be of a new message type, or in another form. The form of the first request is not limited in this embodiment of this application.

S212: The second network element determines, based on the first request, whether the ephemeris of the satellite changes.

S213: The second network element sends the first information to the first network element, where the first information includes the updated ephemeris or the indication information indicating that the ephemeris does not change. Optionally, the first information may be included in a current message type as a new information element, or may be of a new message type, or in another form. The form of the first information is not limited in this embodiment of this application.

For step S220 shown in FIG. 5, refer to the foregoing related descriptions of S220. For brevity, details are not described herein again.

In S211, if the first network element does not have the latest ephemeris, the first network element may further send the first request to the second network element, where the first request is used to request the updated ephemeris. Optionally, in this embodiment of this application, the second network element is a satellite access network device (for example, an SAT RAN), an application function network element (for example, an AF), or another core network element. The first network element may be an access and mobility management function network element (for example, an AMF), a capability exposure network element (for example, an NEF), or another core network element. Optionally, the first request may be an ephemeris query request or ephemeris change subscription information. In S212, after receiving the first request, the second network element may determine whether the ephemeris changes. In S213, the second network element sends the first information to the first network element, where the first information includes the updated ephemeris or the indication information indicating that the ephemeris does not change.

According to the satellite ephemeris update method provided in this application, if the ephemeris has changed, the network side can timely obtain the latest ephemeris without waiting for the request from the terminal device, so that the terminal device can timely and effectively obtain the updated ephemeris. This improves precision of the orbit or the satellite location predicted by the terminal device, reduces the delay of accessing the satellite cell by the terminal device, and improves communication efficiency and user experience.

It should be understood that the method shown in FIG. 4 may also include S211, S212, and S213.

Optionally, the first request includes one or more of the satellite identifier or the orbit identifier, the satellite identifier includes the identifier of the first satellite that serves the terminal device, and the orbit identifier includes the identifier of the orbit in which the first satellite that serves the terminal device is located. In this embodiment of this application, the first satellite may include one or more satellites. For example, the first satellite that serves the terminal device includes the satellite that currently serves the terminal device and/or the satellite that is to serve the terminal device. The satellite identifier includes the identifier of the first satellite, and the orbit identifier includes the identifier of the orbit in which the first satellite is located. Optionally, the orbit in which the first satellite is located may be one or more orbits.

It should be understood that the orbit identifier and/or the satellite identifier in the first request may be from the following several scenarios:

In the first scenario, the terminal device provides the orbit identifier and/or the satellite identifier. In the second scenario, the first network element (for example, the AMF) adds, based on the orbit identifier and/or the satellite identifier provided by the terminal device, and a location, a mobility pattern, or the like of the terminal device, an additional orbit identifier and/or satellite identifier to the orbit identifier and/or the satellite identifier provided by the terminal device. In the third scenario, if the terminal device does not provide the orbit identifier and the satellite identifier, the first network element (for example, the AMF) determines, based on a location, a mobility pattern, or the like of the terminal device, the satellite identifier and/or the satellite identifier that need/needs to be queried. In the fourth scenario, the first network element (for example, the AMF) determines, based on another possible source such as an operator configuration or another network element, the orbit identifier and/or the satellite identifier that need/needs to be queried.

Optionally, the first request may further include at least one of the ephemeris change precision, the ephemeris validity period, or the ephemeris reference time, where the ephemeris change precision indicates the ephemeris change precision requirement of the terminal device, the ephemeris validity period includes a validity period of the satellite stored in the terminal device, and the ephemeris reference time includes time at which the ephemeris stored in the terminal device starts to be used.

It should be understood that, for a specific process in which the second network element determines, based on the first request, whether the ephemeris of the satellite changes, refer to the foregoing descriptions of the process in which the first network element may determine, based on the ephemeris update indication information, whether the ephemeris in the terminal device needs to be updated in S220. For brevity, details are not described herein again.

For example, the second network element determines, based on the ephemeris change precision and the updated ephemeris, that a difference between the updated ephemeris and the ephemeris before update meets the precision requirement.

For another example, the second network element determines, based on the ephemeris validity period and the updated ephemeris, that the ephemeris of the first satellite has exceeded the validity period.

For still another example, the second network element determines, based on the ephemeris reference time and the updated ephemeris, that the time at which the ephemeris of the first satellite starts to be used has changed.

For yet another example, the first request does not include one or more of the satellite identifier, the orbit identifier, the ephemeris change precision, the ephemeris validity period, or the ephemeris reference time. After receiving the first request, the second network element determines, based on locally stored information, that the ephemeris needs to be updated, and sends the latest satellite ephemeris to the first network element.

For still yet another example, after receiving the first request, the second network element directly sends the latest satellite ephemeris to the first network element.

It should be understood that, in this embodiment of this application, a specific process in which the second network element determines, based on the first request, whether the ephemeris of the satellite changes is not limited.

Optionally, in a possible implementation, when the second network element is the satellite access network device (for example, the SAT RAN), if the first request does not include one or more of the satellite identifier or the orbit identifier, the satellite access network device may alternatively determine the one or more of the satellite identifier or the orbit identifier based on one or more of the location information or the mobility pattern of the terminal device. The satellite identifier includes the identifier of the first satellite that serves the terminal device, and the orbit identifier includes the identifier of the orbit in which the first satellite is located. Further, the latest ephemeris of the first satellite that serves the terminal device is determined based on the satellite identifier or the orbit identifier. The updated ephemeris includes the latest ephemeris of the first satellite that serves the terminal device, the satellite identifier includes the identifier of the first satellite that serves the terminal device, and the orbit identifier includes the identifier of the orbit in which the first satellite that serves the terminal device is located.

Optionally, if the first request is the ephemeris change subscription information, before the first network element (where the AMF is used as an example for description) sends the ephemeris change subscription information to the second network element (where the SAT RAN is used as an example for description), the SAT RAN may provide information about the orbit or the satellite in which the SAT RAN is located for the AMF. The orbit or satellite in which the SAT RAN is located may be understood as information about an orbit or a satellite in which the SAT RAN is currently located, or may include one or more pieces of information about another orbit or satellite that is stored by the SAT RAN. Then, the AMF may send the ephemeris change subscription information to the SAT RAN, where the ephemeris change subscription information includes an identifier of one or more orbits in the orbits provided by the SAT RAN, and/or an identifier of one or more satellites in the satellites provided by the SAT RAN. In this way, the SAT RAN can be prevented from sending updated ephemerides of all satellites to the AMF, and only an update status of a satellite ephemeris subscribed to by the AMF needs to be sent to the AMF, so that signaling overheads can be reduced.

Optionally, the AMF may subscribe to the change of the ephemeris from the SAT RAN in the following two scenarios:

In the first scenario, the terminal device accesses a network by using a satellite. To ensure that the precision of the ephemeris in the terminal device does not decrease to a degree that cannot meet the precision requirement of the terminal device, the AMF needs to track the orbit in which the satellite that serves the terminal device is located and/or the change of the ephemeris of the satellite that serves the terminal device. In this scenario, orbit and/or satellite information included in the ephemeris change subscription information is one or more pieces of information about the orbit in which the satellite that serves the terminal device is located or the satellite that serves the terminal device. In consideration of mobility of the terminal device, the ephemeris change subscription information may further include information about a neighboring orbit in which a neighboring satellite that serves the terminal device is located and/or a neighboring satellite that serves the terminal device.

In the second scenario, the orbit and/or satellite information provided by the SAT RAN for the AMF is different from the orbit and/or the satellite of the terminal device managed by the serving AMF. In this case, the AMF may also subscribe to the change of the ephemeris of the orbit and/or the satellite provided by the SAT RAN.

Generally, for a same orbit and/or satellite, the AMF subscribes to the change of the ephemeris from only one SAT RAN.

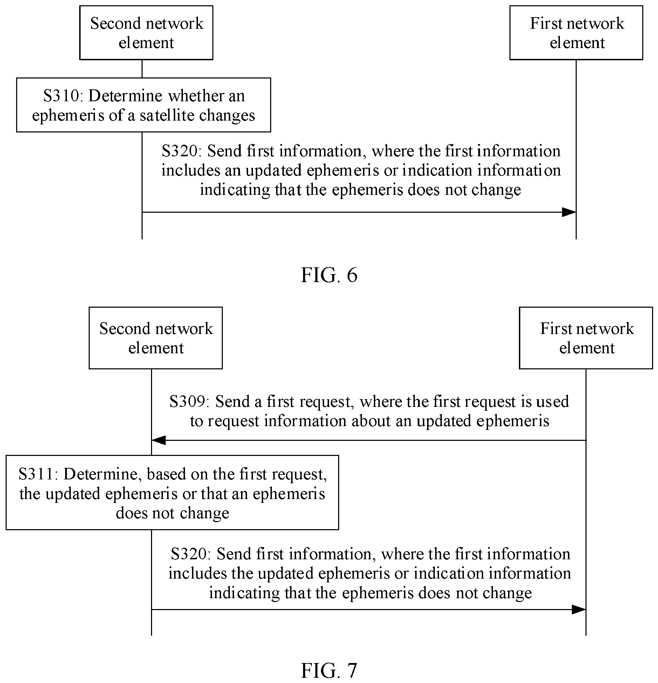

This application further provides a satellite ephemeris update method. The following describes in detail the satellite ephemeris update method provided in this application with reference to FIG. 6. FIG. 6 is a schematic flowchart of a satellite ephemeris update method 300 according to an embodiment of this application. As shown in FIG. 6, the method 300 shown in FIG. 6 may include S310 and S320.

S310: A second network element determines whether an ephemeris of a satellite changes.

S320: The second network element sends first information to a first network element, where the first information includes an updated ephemeris or indication information indicating that the ephemeris does not change. Optionally, the first information may be included in a current message type as a new information element, or may be of a new message type, or in another form. The form of the first information is not limited in this embodiment of this application.

In S310, the second network element determines whether the ephemeris of the satellite changes, where the ephemeris may include an ephemeris of a satellite that currently serves a terminal device and/or that is to serve a terminal device. In other words, in this embodiment of this application, the ephemeris may include an ephemeris of one or more satellites, and/or ephemerides of all satellites in one or more orbits, or the ephemeris may be a whole and even include an ephemeris of an entire satellite system. In this embodiment of this application, the ephemeris may include a satellite level ephemeris and/or an orbit level ephemeris. The ephemeris in the terminal device may alternatively be understood as an ephemeris stored in the terminal device.

In this embodiment of this application, the second network element may be a satellite access network device (for example, an SAT RAN), an application function network element (for example, an AF), or another core network element. The first network element may be an access and mobility management function network element (for example, an AMF), a capability exposure network element (for example, an NEF), or another core network element. In S310, the second network element determines whether the ephemeris of the satellite changes. For example, the second network element may determine, based on a parameter included in a locally stored ephemeris, for example, ephemeris change precision, ephemeris reference time, or an ephemeris validity period, whether the ephemeris changes. For example, the second network element determines whether the ephemeris of the satellite changes when the precision change of the ephemeris exceeds a requirement, the ephemeris precision cannot meet a requirement, the ephemeris validity period has expired, the ephemeris reference time has changed, and so on.

It should be understood that the second network element may alternatively determine, based on other information, whether the ephemeris changes. For example, provided that ephemeris information in the second network element changes, the second network element determines that the ephemeris changes, and sends a latest ephemeris to the first network element. A process in which the second network element determines whether the ephemeris changes is not limited in this embodiment of this application.

After determining whether the ephemeris changes, in S320, the second network element sends the first information to the first network element, where the first information includes the updated ephemeris or the indication information indicating that the ephemeris does not change. The updated ephemeris includes an ephemeris of a first satellite that serves the terminal device, and the indication information indicating that the ephemeris does not change may be indication information indicating that the ephemeris of the first satellite that serves the terminal device does not change. It should be understood that the first satellite that serves the terminal device may include one or more satellites, for example, include the satellite that currently serves the terminal device and/or the satellite that is to serve the terminal device. A satellite identifier includes an identifier of the first satellite that serves the terminal device, an orbit identifier includes an identifier of an orbit in which the first satellite is located, and the orbit in which the first satellite is located may be one or more orbits. Therefore, in this embodiment of this application, the ephemeris may include an ephemeris of a satellite identified by one or more satellite identifiers, and/or ephemerides of all satellites in an orbit identified by one or more orbit identifiers. Alternatively, the ephemeris may be an ephemeris of an entire satellite system.

It should be understood that, in this embodiment of this application, the ephemeris of the first satellite may be understood as ephemerides of all satellites in one or more orbits, or may be understood as an ephemeris of one or more satellites, or may be understood as an ephemeris of an entire satellite system. To be specific, the ephemeris of the first satellite may be a whole. Optionally, the ephemeris of the first satellite may also be referred to as an ephemeris stored in the terminal device.

After receiving the first information, the first network element may notify the terminal device of the first information by using a downlink NAS message or other signaling, or may send the first information to the terminal device after the first network element sends ephemeris update indication information. If the first information includes the updated ephemeris, the terminal device may search for the satellite based on the updated ephemeris and access a satellite cell. If the first information includes the indication information indicating that the ephemeris does not change, the first terminal device may continue to use a previous ephemeris to search for the satellite and access the satellite cell.

It should be further understood that, after the first network element (for example, the AMF) receives the first information (ephemeris data), if it is determined that the change of the ephemeris still meets an ephemeris change precision requirement of the terminal device (where for example, the AMF does not send reference time or precision information of an old ephemeris to the second network element (for example, the SAT RAN)), or the ephemeris does not change, the AMF may not send the indication information indicating that the ephemeris does not change to the terminal device. In other words, if the change of the ephemeris still meets an ephemeris change precision requirement of the terminal device or the ephemeris does not change, the AMF may not send the indication information indicating that the ephemeris does not change to the terminal device. If the terminal device does not receive the indication information indicating that the ephemeris does not change or the updated ephemeris sent by the AMF, it is considered by default that the ephemeris does not change, and the first terminal device may continue to use a previous ephemeris to search for the satellite and access the satellite cell.

According to the satellite ephemeris update method provided in this application, a network side can timely learn whether the ephemeris changes. If the ephemeris has changed, the network side can timely obtain a latest ephemeris after the change and timely notify the terminal device of ephemeris change information, so that the terminal device can timely and effectively obtain the updated ephemeris. This improves precision of an orbit or a satellite location predicted by the terminal device, reduces a delay of accessing a satellite cell by the terminal device, and improves communication efficiency and user experience.

Optionally, FIG. 7 is a schematic flowchart of a satellite ephemeris update method according to some embodiments of this application. Based on the method steps shown in FIG. 6, the method 300 further includes S309.

S309: The second network element receives a first request from the first network element, to be specific, the first network element sends the first request to the second network element, where the first request is used to request information about the updated ephemeris. Optionally, the first request may be included in a current message type as a new information element, or may be of a new message type, or in another form. The form of the first request is not limited in this embodiment of this application.

S310 may include S311.

S311: The second network element determines, based on the first request, the updated ephemeris or that the ephemeris does not change.

For step S320 shown in FIG. 7, refer to the foregoing related descriptions of S320. For brevity, details are not described herein again.

In S309, the first network element may send the first request to the second network element, where the first request is used to request the information about the updated ephemeris. Optionally, the first request may be an ephemeris query request or ephemeris change subscription information. In S311, the second network element determines, based on the first request, the updated ephemeris or that the ephemeris does not change. For specific descriptions of S309 and S311, refer to the foregoing descriptions of S211 to S213. For brevity, details are not described herein again.

Optionally, the first request includes one or more of the satellite identifier or the orbit identifier, the satellite identifier includes the identifier of the first satellite that serves the terminal device, and the orbit identifier includes the identifier of the orbit in which the first satellite that serves the terminal device is located.

Optionally, the first request further includes at least one of ephemeris change precision, an ephemeris validity period, or ephemeris reference time, where the ephemeris change precision indicates an ephemeris change precision requirement of the terminal device, the ephemeris validity period includes a validity period of the satellite stored in the terminal device, and the ephemeris reference time includes time at which the ephemeris stored in the terminal device starts to be used. The ephemeris stored in the terminal device may be understood as ephemerides of all satellites in one or more orbits, or may be understood as an ephemeris of one or more satellites, or may be understood as an ephemeris of an entire satellite system. In other words, the ephemeris stored in the terminal device may be a whole.

In this embodiment of this application, the second network element determines, based on the first request, the updated ephemeris or that the ephemeris does not change.

For example, in a possible implementation, if the first request includes the ephemeris change precision, the second network element may determine, based on the ephemeris change precision and the updated ephemeris, that a difference between the updated ephemeris and the ephemeris before update meets the precision requirement.

For another example, in a possible implementation, if the first request includes the ephemeris validity period, the second network element may determine, based on the ephemeris validity period and the updated ephemeris, that the ephemeris of the first satellite has exceeded the validity period.

For still another example, in a possible implementation, if the first request includes the ephemeris reference time, the second network element determines, based on the ephemeris reference time and the updated ephemeris, that the time at which the ephemeris of the first satellite starts to be used has changed.

For yet another example, in a possible implementation, if the first request does not include one or more of the satellite identifier, the orbit identifier, the ephemeris change precision, the ephemeris validity period, or the ephemeris reference time, the second network element determines, based on locally stored information, that the ephemeris needs to be updated, and sends the latest satellite ephemeris to the first network element.

For still yet another example, after receiving the first request, the second network element directly sends the latest satellite ephemeris to the first network element.

It should be understood that, for a specific process in which the second network element determines, based on the first request, whether the ephemeris of the satellite changes, refer to the related descriptions in the foregoing method 200. For brevity, details are not described herein again.

Optionally, in a possible implementation, when the second network element is the satellite access network device, the satellite access network device may further determine, based on one or more of location information or a mobility pattern of the terminal device corresponding to the ephemeris of the satellite, the latest ephemeris of the first satellite that serves the terminal device. The updated ephemeris includes the latest ephemeris of the first satellite that serves the terminal device, the satellite identifier includes the identifier of the first satellite that serves the terminal device, and the orbit identifier includes the identifier of the orbit in which the first satellite that serves the terminal device is located.

According to the satellite ephemeris update method provided in this application, a network side can timely learn whether the ephemeris changes. If the ephemeris has changed, the network side can timely obtain a latest ephemeris after the change and timely notify the terminal device of ephemeris change information, so that the terminal device can timely and effectively obtain the updated ephemeris.

The following describes the ephemeris update method provided in this application with reference to a specific example.

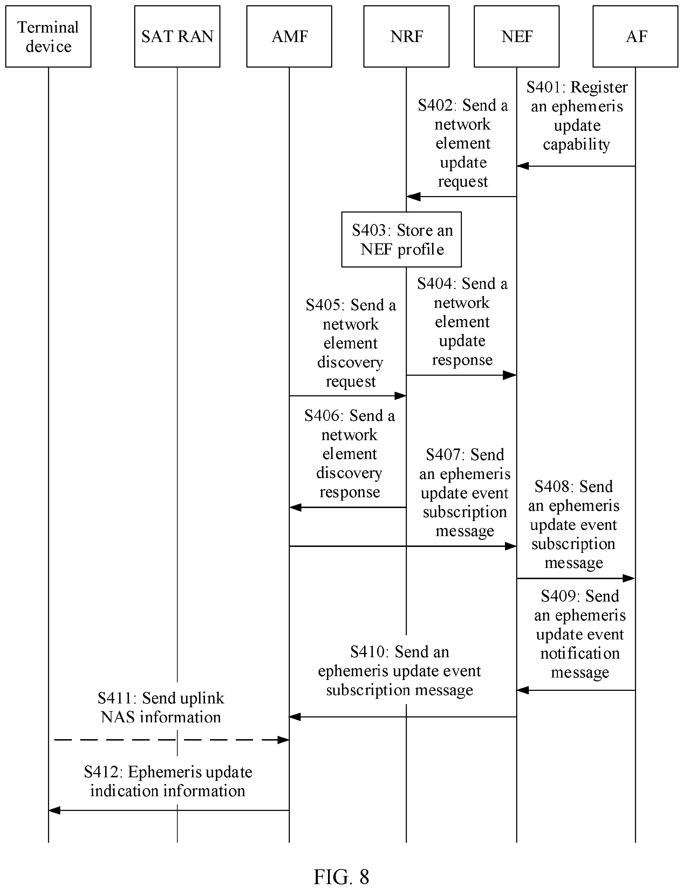

FIG. 8 is a schematic interaction diagram of an ephemeris update method. As shown in FIG. 8, the method 400 includes the following steps:

S401: Register an ephemeris update event of an AF with an NEF in advance in a manner such as an operation, administration, and maintenance (Operation Administration, and Maintenance, OAM) configuration. Optionally, registration information includes one or more of an AF identifier, an AF service identifier, orbit information, or satellite information.

S402: The NEF sends a network element update request message to an NRF, where the network element update request message is used to update the registration information of the NEF in the NRF, namely, an NEF profile (Profile), and the network element update request message includes an identifier of the ephemeris update event. Optionally, the network element update request message may further include one or more of the orbit information, the satellite information, a related AF identifier, or an application identifier.

S403: The NRF stores the NEF profile.

S404: The NRF sends a network element update response to the NEF, to confirm that the NEF profile is updated.

S405: An AMF determines that an ephemeris change event needs to be subscribed to, and sends a network element discovery request to the NRF, where the network element discovery request is used to discover an appropriate NEF that can be used to subscribe to the ephemeris update event. The network element discovery request includes a network element type, namely, the NEF. Optionally, the network element discovery request may further include one or more of the identifier of the ephemeris update event, the orbit information, the satellite information, precision information, reference time of an old ephemeris, the related AF identifier, or the application identifier.

S406: The NRF matches parameter information provided by the AMF, and sends a network element discovery response to the AMF, where the network element discovery response includes information about the NEF, for example, an identifier of an instance of the NEF and an address of the instance of the NEF.

S407: The AMF sends an ephemeris update event subscription message to the NEF, where the message is used by the AMF to subscribe to the ephemeris update event from the NEF. The message includes one or more of the identifier of the ephemeris update event, the orbit information, the satellite information, the related AF identifier, or the application identifier. If authorization of the NEF is successful, triggering of the ephemeris change event is associated with an identifier of the AMF

S408: Based on the request of the AMF, the NEF sends an ephemeris update event subscription message to the AF, where the message is used by the NEF to subscribe to the ephemeris change event from the AF.

S409: If an ephemeris changes, the AF sends an ephemeris update event notification message to the NEF, where the message includes latest ephemeris data. When determining whether the ephemeris changes, the AF may consider the precision information provided by the AMF and the reference time of the old ephemeris. For example, if an ephemeris change degree meets a precision requirement, it may be determined that a result of the change of the ephemeris is that the ephemeris does not change. It should be understood that the change of the ephemeris herein may be planned change. That is, the change actually does not occur. In this case, when ephemeris data is sent, a changed planned time point is also sent. Optionally, the notification message of the AF may further include other parameters related to the ephemeris, such as a validity period of the latest ephemeris data.

S410: Based on the event notification from the AF, the NEF sends an ephemeris update event notification message to the AMF, where the ephemeris update event notification message may include a latest ephemeris or indication information indicating that the ephemeris does not change. Optionally, the notification message may further include an ephemeris validity period and the like.

S411: A terminal device sends uplink NAS information to the AMF, where the uplink NAS information is used to indicate to update the ephemeris in the terminal device. It should be understood that S411 is an optional step.

S412: The AMF sends ephemeris update indication information to the terminal device, where the ephemeris update indication information includes an updated ephemeris or the indication information indicating that the ephemeris does not change. Optionally, the ephemeris update indication information may be carried by using downlink NAS information or other signaling.

According to the satellite ephemeris update method provided in this application, when a third party (for example, the AF) manages a satellite, a core network side can timely obtain ephemeris update information, and send the ephemeris update information to the terminal device.

It should be further understood that the foregoing descriptions are merely intended to help a person skilled in the art better understand embodiments of this application, but are not intended to limit the scope of embodiments of this application. It is apparent that a person skilled in the art may make various equivalent modifications or changes according to the examples provided above. For example, some steps in the embodiments in the method 200, the method 300, and the method 400 may be unnecessary, or some steps may be newly added. Alternatively, any two or more of the foregoing embodiments are combined. A modified, changed, or combined solution also falls within the scope of the embodiments of this application.

It should be further understood that the foregoing descriptions of the embodiments of this application emphasize differences between the embodiments. For same or similar parts that are not mentioned, refer to the embodiments. For brevity, details are not described herein again.

It should be understood that, sequence numbers of the foregoing processes do not mean execution sequences. The execution sequences of the processes should be determined based on functions and internal logic of the processes, and should not be construed as any limitation on the implementation processes of embodiments of this application.

It should be further understood that in embodiments of this application, "presetting" and "predefinition" may be implemented by prestoring, in a device (including, for example, a terminal device and a network device), corresponding code, a corresponding table, or another manner that may be used to indicate related information. A specific implementation is not limited in this application.

It should be further understood that division of the manners, cases, categories, and embodiments in embodiments of this application is merely intended for ease of description, and should not constitute a particular limitation. The features in the manners, categories, cases, and embodiments may be combined without contradiction.

It should be further understood that in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

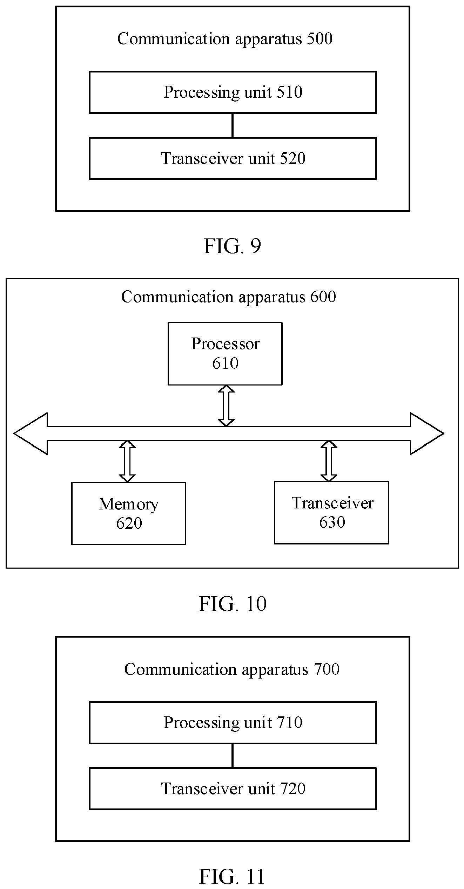

The foregoing describes in detail the satellite ephemeris updating method in embodiments of this application with reference to FIG. 1 to FIG. 8. The following describes in detail a communication apparatus in embodiments of this application with reference to FIG. 9 to FIG. 13.

FIG. 9 is a schematic block diagram of a communication apparatus 500 according to an embodiment of this application. The apparatus 300 may correspond to the first network element described in the method 200, or may be a chip or a component used in the first network element. In addition, modules or units in the apparatus 500 are separately configured to perform the actions or the processing processes performed by the first network element (for example, the AMF) in the method 200, the method 300, the method 400, FIG. 3 to FIG. 7, and FIG. 8.

As shown in FIG. 9, the apparatus 500 includes a processing unit 510 and a transceiver unit 520. The transceiver unit 520 is configured to perform specific signal receiving and sending under driving of the processing unit 510.

The processing unit 510 is configured to determine whether an ephemeris in a terminal device needs to be updated; and

the transceiver unit 520 is configured to send first information to the terminal device, where the first information includes an updated ephemeris or indication information indicating that the ephemeris does not change.

The communication apparatus provided in this application may notify the terminal device of an ephemeris update status. If the ephemeris has changed, the communication apparatus (or a core network element) can timely obtain a latest ephemeris without waiting for a request from the terminal device, so that the terminal device can timely and effectively obtain the updated ephemeris. This improves precision of an orbit or a satellite location predicted by the terminal device, reduces a delay of accessing a satellite cell by the terminal device, and improves communication efficiency and user experience.

Optionally, in some embodiments of this application, the transceiver unit 520 is further configured to receive ephemeris update indication information from the terminal device, where the ephemeris update indication information is used to indicate to update the ephemeris in the terminal device.

Optionally, in some embodiments of this application, the ephemeris update indication information includes one or more of a satellite identifier or an orbit identifier, the satellite identifier includes an identifier of a first satellite that serves the terminal device, and the orbit identifier includes an identifier of an orbit in which the first satellite is located.

Optionally, in some embodiments of this application, the ephemeris update indication information further includes at least one of ephemeris change precision, an ephemeris validity period, or ephemeris reference time, where the ephemeris change precision indicates an ephemeris change precision requirement of the terminal device, the ephemeris validity period includes an ephemeris validity period of the first satellite, and the ephemeris reference time includes time at which the ephemeris of the first satellite starts to be used.

Optionally, in some embodiments of this application, the transceiver unit 520 is further configured to:

send a first request to a second network element, where the first request is used to request the updated ephemeris; and
receive the first information from the second network element.

Optionally, in some embodiments of this application, the first request includes one or more of the satellite identifier or the orbit identifier, the satellite identifier includes the identifier of the first satellite that serves the terminal device, and the orbit identifier includes the identifier of the orbit in which the first satellite that serves the terminal device is located.

Optionally, in some embodiments of this application, the processing unit 510 is further configured to determine, based on the ephemeris update indication information, whether the ephemeris in the terminal device needs to be updated.

Optionally, in some embodiments of this application, the processing unit 510 is further configured to determine, based on the ephemeris change precision of the terminal device and the updated ephemeris, that a difference between the updated ephemeris and the ephemeris in the terminal device meets the ephemeris change precision requirement of the terminal device, where the ephemeris change precision indicates the ephemeris change precision requirement of the terminal device.

Optionally, in some embodiments of this application, the processing unit 510 is further configured to determine, based on the ephemeris validity period of the terminal device and the updated ephemeris, that the ephemeris in the terminal device has exceeded the validity period, where the ephemeris validity period includes the ephemeris validity period of the first satellite that serves the terminal device.

Optionally, in some embodiments of this application, the processing unit 510 is further configured to determine, based on the ephemeris reference time of the terminal device and the updated ephemeris, that the time at which the ephemeris in the terminal device starts to be used has changed, where the ephemeris reference time includes the time at which the ephemeris of the first satellite that serves the terminal device starts to be used.

Optionally, in some embodiments of this application, the processing unit 510 is further configured to determine the satellite identifier or the orbit identifier based on one or more of location information or a mobility pattern of the terminal device, where the satellite identifier includes the identifier of the first satellite that serves the terminal device, and the orbit identifier includes the identifier of the orbit in which the first satellite that serves the terminal device is located.

Optionally, in some embodiments of this application, the communication apparatus is an access and mobility management function network element.

Optionally, in some embodiments of this application, the second network element is a satellite access network device, an application function network element, or a core network element.

Optionally, in some embodiments of this application, the ephemeris includes one or more of a satellite level parameter or an orbital plane parameter.

Further, the apparatus 500 may further include a storage unit, and the transceiver unit 520 may be a transceiver, an input/output interface, or an interface circuit. The storage unit is configured to store instructions executed by the transceiver unit 520 and the processing unit 510. The transceiver unit 520, the processing unit 510, and the storage unit are coupled to each other. The storage unit stores instructions. The processing unit 510 is configured to execute the instructions stored in the storage unit. The transceiver unit 520 is configured to perform specific signal receiving and sending under driving of the processing unit 510.

It should be understood that, for a specific process in which the units in the apparatus 500 perform the foregoing corresponding steps, refer to the foregoing related descriptions of the first network element (for example, the AMF) in the foregoing related embodiments with reference to the method 200, the method 300, the method 400, FIG. 3 to FIG. 7, and FIG. 8. For brevity, details are not described herein again.

Optionally, the transceiver unit 520 may include a receiving unit (module) and a sending unit (module), and may be configured to perform the steps of receiving information and sending information by the first network element (for example, the AMF) in the embodiments in the method 200, the method 300, the method 400, FIG. 3 to FIG. 7, and FIG. 8.

It should be understood that the transceiver unit 520 may be a transceiver, an input/output interface, or an interface circuit. The storage unit may be a memory. The processing unit 510 may be implemented by a processor. As shown in FIG. 10, a communication apparatus 600 may include a processor 610, a memory 620, and a transceiver 630. Components of the communication apparatus 600 may be coupled together through, for example, a bus system.

The communication apparatus 500 shown in FIG. 9 or the communication apparatus 600 shown in FIG. 10 can implement the steps performed by the first network element (for example, the AMF) in the related embodiments in the method 200, the method 300, the method 400, FIG. 3 to FIG. 7, and FIG. 8. For similar descriptions, refer to the descriptions in the foregoing corresponding methods. To avoid repetition, details are not described herein again.

It should be further understood that the communication apparatus 500 shown in FIG. 9 or the communication apparatus 600 shown in FIG. 10 may be a core network device, for example, may be an AMF, an SMF, or another core network device. This is not limited herein in embodiments of this application.

FIG. 11 is a schematic block diagram of a communication apparatus 700 according to an embodiment of this application. The apparatus 700 may correspond the second network element described in the method 200, the method 300, and FIG. 5 to FIG. 7, or may be a chip or a component used in the second network element. In addition, modules or units in the apparatus 700 are separately configured to perform the actions or the processing processes performed by the second network element in the method 200 and the method 300.

As shown in FIG. 11, the apparatus 700 may include a processing unit 710 and a transceiver unit 720. The transceiver unit 720 is configured to perform specific signal receiving and sending under driving of the processing unit 710.

The processing unit 710 is configured to determine whether an ephemeris of a satellite changes; and

the transceiver unit 720 is configured to send first information to a first network element, where the first information includes an updated ephemeris or indication information indicating that the ephemeris does not change.

According to the communication apparatus provided in this application, the second network element (a network side) can timely learn whether the ephemeris changes. If the ephemeris has changed, the network side can timely obtain a latest ephemeris after the change and can timely notify the terminal device of ephemeris change information, so that the terminal device can timely and effectively obtain the updated ephemeris. This improves precision of an orbit or a satellite location predicted by the terminal device, reduces a delay of accessing a satellite cell by the terminal device, and improves communication efficiency and user experience.

Optionally, in some embodiments of this application, the transceiver unit 720 is further configured to receive a first request from the first network element, where the first request is used to request information about the updated ephemeris.

The processing unit 710 is further configured to determine, based on the first request, the updated ephemeris or that the ephemeris does not change.

Optionally, in some embodiments of this application, the first request includes one or more of a satellite identifier or an orbit identifier, the satellite identifier includes an identifier of a first satellite that serves the terminal device, and the orbit identifier includes an identifier of an orbit in which the first satellite that serves the terminal device is located.

Optionally, in some embodiments of this application, the first request further includes at least one of ephemeris change precision, an ephemeris validity period, or ephemeris reference time, where the ephemeris change precision indicates an ephemeris change precision requirement of the terminal device, the ephemeris validity period includes an ephemeris validity period of the first satellite, and the ephemeris reference time includes time at which the ephemeris of the first satellite starts to be used.

Optionally, in some embodiments of this application, if the first request includes the ephemeris change precision, the processing unit 710 is further configured to determine, based on the ephemeris change precision and the updated ephemeris, that a difference between the updated ephemeris and the ephemeris before update meets the precision requirement.

Optionally, in some embodiments of this application, if the first request includes the ephemeris validity period, the processing unit 710 is further configured to determine, based on the ephemeris validity period and the updated ephemeris, that the ephemeris of the first satellite has exceeded the validity period.

Optionally, in some embodiments of this application, if the first request includes the ephemeris reference time, the processing unit 710 is further configured to determine, based on the ephemeris reference time and the updated ephemeris, that the time at which the ephemeris of the first satellite starts to be used has changed.

Optionally, in some embodiments of this application, the second network element is a satellite access network device, and the processing unit 710 is further configured to: determine, based on one or more of location information or a mobility pattern of the terminal device corresponding to the ephemeris of the satellite, a latest ephemeris of the first satellite that serves the terminal device, where the updated ephemeris includes the latest ephemeris of the first satellite that serves the terminal device, the satellite identifier includes the identifier of the first satellite that serves the terminal device, and the orbit identifier includes the identifier of the orbit in which the first satellite that serves the terminal device is located.

Optionally, in some embodiments of this application, the first network element is an access and mobility management function network element or a capability exposure network element.

Optionally, in some embodiments of this application, the communication apparatus is an application function network element, the satellite access network device, or a core network element.

Optionally, in some embodiments of this application, the ephemeris includes one or more of a satellite level parameter or an orbital plane parameter.

Optionally, the transceiver unit 720 may include a receiving unit (module) and a sending unit (module), and may be configured to perform the steps of receiving information and sending information by the second network element in the embodiments in the method 200 and the method 300 and the embodiments shown in FIG. 5 to FIG. 7.

Further, the apparatus 700 may further include a storage unit. The transceiver unit 720 may be a transceiver, an input/output interface, or an interface circuit. The storage unit is configured to store instructions executed by the transceiver unit 720 and the processing unit 710. The transceiver unit 720, the processing unit 710, and the storage unit are coupled to each other. The storage unit stores instructions. The processing unit 710 is configured to execute the instructions stored in the storage unit. The transceiver unit 720 is configured to perform specific signal receiving and sending under driving of the processing unit 710.

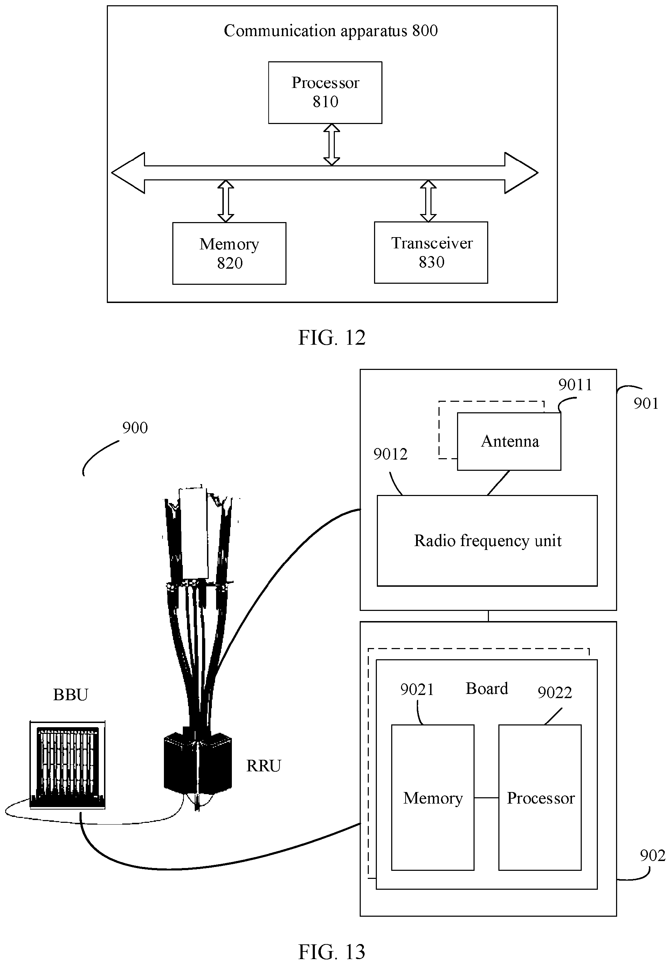

It should be understood that the transceiver unit 720 may be a transceiver, an input/output interface, or an interface circuit. The storage unit may be a memory. The processing unit 710 may be implemented by a processor. As shown in FIG. 12, a communication apparatus 800 may include a processor 810, a memory 820, and a transceiver 830.

The communication apparatus 700 shown in FIG. 11 or the communication apparatus 800 shown in FIG. 12 can implement the steps performed by the second network element in the embodiments in the method 200 and the method 300 and the embodiments shown in FIG. 5 to FIG. 7. For similar descriptions, refer to the descriptions in the foregoing corresponding methods. To avoid repetition, details are not described herein again.

It should be further understood that the communication apparatus 700 shown in FIG. 11 or the communication apparatus 800 shown in FIG. 12 may be a satellite access network device (for example, an SAT RAN), an application function network element (for example, an AF), or another core network element. This is not limited herein in embodiments of this application.

It should be understood that division into the units in the apparatus is merely logical function division. During actual implementation, all or some of the units may be integrated into one physical entity or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. The processing element herein may also be referred to as a processor, and may be an integrated circuit having a signal processing capability. During implementation, steps in the foregoing methods or the foregoing units may be implemented by using a hardware integrated logic circuit in a processing element, or may be implemented in the form of software invoked by the processing element.

For example, a unit in any one of the foregoing apparatuses may be one or more integrated circuits configured to implement the foregoing methods, for example, one or more application-specific integrated circuits (application-specific integrated circuit, ASIC), one or more digital signal processors (digital signal processor, DSP), one or more field programmable gate arrays (field programmable gate array, FPGA), or a combination of at least two of these integrated circuits. For another example, when the units in the apparatus may be implemented in a form in which a processing element schedules a program, the processing element may be a general-purpose processor, for example, a central processing unit (central processing unit, CPU) or another processor that can invoke the program. For still another example, the units may be integrated together and implemented in a form of a system-on-a-chip (system-on-a-chip, SOC).

FIG. 13 is a schematic diagram of a structure of a satellite access network device 900 according to an embodiment of this application. The satellite access network device 900 may be configured to implement functions of the satellite access network device (for example, an SAT RAN) in the foregoing methods. The satellite access network device 900 includes one or more radio units, for example, a remote radio unit (remote radio unit, RRU) 901 and one or more baseband units (baseband unit, BBU) (which may also be referred to as a digital unit, digital unit, DU) 902. The RRU 901 may be referred to as a transceiver unit, a transceiver machine, a transceiver circuit, a transceiver, or the like, and may include at least one antenna 9011 and a radio frequency unit 9012. The RRU 901 is mainly configured to perform receiving and sending of a radio frequency signal and conversion between a radio frequency signal and a baseband signal, for example, send the signaling message in the foregoing embodiments to a terminal device. The BBU 902 is mainly configured to: perform baseband processing, control a base station, and so on. The RRU 901 and the BBU 902 may be physically disposed together, or may be physically separated, that is, in a distributed base station.

The BBU 902 is a control center of the base station, may also be referred to as a processing unit, and is mainly configured to complete a baseband processing function such as channel coding, multiplexing, modulation, or spreading. For example, the BBU (the processing unit) 902 may be configured to control the base station 90 to perform an operation procedure related to the network device in the foregoing method embodiments.

In an example, the BBU 902 may include one or more boards. A plurality of boards may jointly support a radio access network (for example, an LTE system or a 5G system) of a single access standard, or may separately support radio access networks of different access standards. The BBU 902 further includes a memory 9021 and a processor 9022. The memory 9021 is configured to store necessary instructions and necessary data. For example, the memory 9021 stores a codebook and the like in the foregoing embodiments. The processor 9022 is configured to control the base station to perform a necessary action, for example, is configured to control the base station to perform an operation procedure related to the network device in the foregoing method embodiments. The memory 9021 and the processor 9022 may serve one or more boards. In other words, a memory and a processor may be disposed on each board. Alternatively, a plurality of boards may share a same memory and a same processor. In addition, a necessary circuit may further be disposed on each board.

In a possible implementation, with development of a system-on-chip (system-on-chip, SoC) technology, all or some functions of the part 902 and the part 901 may be implemented by using the SoC technology, for example, implemented through a base station function chip. The base station function chip integrates components such as a processor, a memory, and an antenna interface. A program of a base station-related function is stored in the memory. The processor executes the program to implement the base station-related function. Optionally, the base station function chip can also read a memory outside the chip to implement the base station-related function.

It should be understood that the structure of the satellite access network device shown in FIG. 13 is merely a possible form, and should not constitute any limitation on embodiments of this application. According to this application, a possibility that a structure of the satellite access network device in another form in the future is not excluded.

It should be further understood that when all functions of a base station are integrated into a satellite, the satellite access network device may be understood as a unit or a device of a part of functions of the base station on the satellite, and all signaling and data processing related to an access network are performed on the satellite. When one part of functions of a base station are integrated into the satellite, and the other part of functions are located on the ground, the satellite access network device may be understood as a unit or a device with the part of functions of the base station on the satellite and a base station device on the ground, and one part of signaling and data processing related to an access network are performed on the satellite and the other part is performed on the ground. During satellite backhaul, the satellite access network device may be understood as a base station device on the ground, signaling and data processing related to the access network are all performed by the base station on the ground, and the satellite transparently transmits signaling and data between the terminal device and the satellite access network device.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

An embodiment of this application further provides a communication system. The communication system includes the foregoing first network element, the foregoing second network element, and the foregoing terminal device.

An embodiment of this application further provides a computer-readable medium, configured to store computer program code. The computer program includes instructions used to perform the satellite ephemeris update methods in the embodiments of this application in the method 200 to the method 400. The readable medium may be a read-only memory (read-only memory, ROM) or a random access memory (random access memory, RAM). This is not limited in embodiments of this application.

This application further provides a computer program product. The computer program product includes instructions; and when the instructions are executed, a first network element and a second network element respectively perform operations corresponding to the first network element and the second network element in the foregoing methods.

An embodiment of this application further provides a system chip. The system chip includes a processing unit and a communication unit. The processing unit may be, for example, a processor, and the communication unit may be, for example, an input/output interface, a pin, a circuit, or the like. The processing unit may execute computer instructions, so that a chip in the communication apparatus performs any satellite ephemeris update method provided in the foregoing embodiments of this application.

Optionally, any communication apparatus provided in the foregoing embodiments of this application may include the system chip.

Optionally, the computer instructions are stored in a storage unit.

Optionally, the storage unit is a storage unit in the chip, for example, a register or a cache. The storage unit may further be a storage unit, such as a ROM, another type of static storage device that can store static information and instructions, or a RAM, that is outside the chip and that is in the terminal. The processor described above may be a CPU, a microprocessor, an ASIC, or one or more integrated circuits configured to control execution of a program for the satellite ephemeris update methods. The processing unit and the storage unit may be decoupled, are separately disposed on different physical devices, and are connected in a wired or wireless manner to implement functions of the processing unit and the storage unit, to support the system chip in implementing various functions in the foregoing embodiments. Alternatively, the processing unit and the memory may be coupled to a same device.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Terms "uplink" and "downlink" in this application are used to describe a data/information transmission direction in a specific scenario. For example, the "uplink" direction generally refers to a direction in which data/information is transmitted from a terminal to a network side, or a direction in which a distributed unit transmits data/information to a centralized unit, and the "downlink" direction generally refers to a direction in which data/information is transmitted from a network side to a terminal. Alternatively, in a transmission direction from the centralized unit to the distributed unit, it may be understood that "uplink" and "downlink" are merely used to describe a data/information transmission direction, and a specific start/end device of the data/information transmission is not limited.

In this application, names may be assigned to various objects, for example, messages/information/devices/network elements/systems/apparatuses/actions/operations/procedures/concepts. It can be understood that the specific names do not constitute a limitation on the related objects, and the assigned names may vary with factors such as a scenarios, a context, or a use habit. Understanding of technical meanings of technical terms in this application should be determined mainly based on functions and technical effects reflected/performed by the technical terms in the technical solutions.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate components may or may not be physically separate, and components displayed as units may or may not be physical units. To be specific, the components may be located at one position, or may be distributed on a plurality of network units. Some or all of the units may be selected according to actual requirements to achieve the objectives of the solutions of embodiments.

In addition, function units in embodiments of this application may be integrated into one processing unit, or each of the units may exist alone physically, or two or more units are integrated into one unit.

When the functions are implemented in the form of a software function unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, a network device, or the like) to perform all or some of the steps of the methods described in embodiments of this application The storage medium includes a USB flash drive, a removable hard disk, a read-only memory (read-only memory, ROM), a random access memory.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A satellite ephemeris update method, comprising:

   determining, by a first network element, whether an ephemeris in a terminal device needs to be updated; and
   sending, by the first network element, first information to the terminal device, wherein the first information comprises an updated ephemeris or indication information indicating that the ephemeris does not change.

2. The method according to claim 1, wherein the method further comprises:
   receiving, by the first network element, ephemeris update indication information from the terminal device, wherein the ephemeris update indication information is used to indicate to update the ephemeris in the terminal device.

3. The method according to claim 2, wherein the ephemeris update indication information comprises one or more of a satellite identifier or an orbit identifier, the satellite identifier comprises an identifier of a first satellite that serves the terminal device, and the orbit identifier comprises an identifier of an orbit in which the first satellite is located.

4. The method according to claim 3, wherein the ephemeris update indication information further comprises at least one of ephemeris change precision, an ephemeris validity period, or ephemeris reference time, wherein
   the ephemeris change precision indicates an ephemeris change precision requirement of the terminal device, the ephemeris validity period comprises an ephemeris validity period of the first satellite, and the ephemeris reference time comprises time at which the ephemeris of the first satellite starts to be used.

5. The method according to any one of claims 1 to 4, wherein before the determining, by a first network element, whether an ephemeris in a terminal device needs to be updated, the method further comprises:

   sending, by the first network element, a first request to a second network element, wherein the first request is used to request the updated ephemeris; and
   receiving, by the first network element, the first information from the second network element.

6. The method according to claim 5, wherein the first request comprises one or more of the satellite identifier or the orbit identifier, the satellite identifier comprises the identifier of the first satellite that serves the terminal device, and the orbit identifier comprises the identifier of the orbit in which the first satellite that serves the terminal device is located.

7. The method according to any one of claims 2 to 6, wherein the determining, by a first network element, whether an ephemeris in a terminal device needs to be updated comprises:
   determining, by the first network element based on the ephemeris update indication information, whether the ephemeris in the terminal device needs to be updated.

8. The method according to any one of claims 1 to 7, wherein the determining, by the first network element, that the ephemeris in the terminal device needs to be updated comprises:
determining, by the first network element based on the ephemeris change precision of the terminal device and the updated ephemeris, that a difference between the updated ephemeris and the ephemeris in the terminal device meets the ephemeris change precision requirement of the terminal device, wherein the ephemeris change precision indicates the ephemeris change precision requirement of the terminal device.

9. The method according to any one of claims 1 to 8, wherein the determining, by the first network element, that the ephemeris in the terminal device needs to be updated comprises:
determining, by the first network element based on the ephemeris validity period of the terminal device and the updated ephemeris, that the ephemeris in the terminal device has exceeded the validity period, wherein the ephemeris validity period comprises the ephemeris validity period of the first satellite that serves the terminal device.

10. The method according to any one of claims 1 to 9, wherein the determining, by the first network element, that the ephemeris in the terminal device needs to be updated comprises:
determining, by the first network element based on the ephemeris reference time of the terminal device and the updated ephemeris, that the time at which the ephemeris in the terminal device starts to be used has changed, wherein the ephemeris reference time comprises the time at which the ephemeris of the first satellite that serves the terminal device starts to be used.

11. The method according to any one of claims 1 to 10, wherein the method further comprises:
determining, by the first network element, the satellite identifier or the orbit identifier based on one or more of location information or a mobility pattern of the terminal device, wherein the satellite identifier comprises the identifier of the first satellite that serves the terminal device, and the orbit identifier comprises the identifier of the orbit in which the first satellite that serves the terminal device is located.

12. The method according to any one of claims 1 to 11, wherein the first network element is an access and mobility management function network element.

13. The method according to claim 5 or 6, wherein the second network element is a satellite access network device, an application function network element, or a core network element.

14. The method according to any one of claims 1 to 13, wherein the ephemeris comprises one or more of a satellite level parameter or an orbital plane parameter.

15. A satellite ephemeris update method, comprising:

   determining, by a second network element, whether an ephemeris of a satellite changes; and
   sending, by the second network element, first information to a first network element, wherein the first information comprises an updated ephemeris or indication information indicating that the ephemeris does not change.

16. The method according to claim 15, wherein the method further comprises:

   receiving, by the second network element, a first request from the first network element, wherein the first request is used to request information about the updated ephemeris; and
   determining, by the second network element based on the first request, the updated ephemeris or that the ephemeris does not change.

17. The method according to claim 16, wherein the first request comprises one or more of a satellite identifier or an orbit identifier, the satellite identifier comprises an identifier of a first satellite that serves a terminal device, and the orbit identifier comprises an identifier of an orbit in which the first satellite is located.

18. The method according to claim 17, wherein the first request further comprises at least one of ephemeris change precision, an ephemeris validity period, or ephemeris reference time, wherein
the ephemeris change precision indicates an ephemeris change precision requirement of the terminal device, the ephemeris validity period comprises an ephemeris validity period of the first satellite, and the ephemeris reference time comprises time at which the ephemeris of the first satellite starts to be used.

**19.** The method according to claim 18, wherein if the first request comprises the ephemeris change precision, the determining, by the second network element, that an ephemeris of a satellite changes comprises:
determining, by the second network element based on the ephemeris change precision and the updated ephemeris, that a difference between the updated ephemeris and the ephemeris before update meets the precision requirement.

**20.** The method according to claim 18 or 19, wherein if the first request comprises the ephemeris validity period, the determining, by the second network element, that an ephemeris of a satellite changes comprises:
determining, by the second network element based on the ephemeris validity period and the updated ephemeris, that the ephemeris of the first satellite has exceeded the validity period.

**21.** The method according to any one of claims 18 to 20, wherein if the first request comprises the ephemeris reference time, the determining, by the second network element, that an ephemeris of a satellite changes comprises:
determining, by the second network element based on the ephemeris reference time and the updated ephemeris, that the time at which the ephemeris of the first satellite starts to be used has changed.

**22.** The method according to any one of claims 15 to 21, wherein the second network element is a satellite access network device, and the method further comprises:
determining, by the satellite access network device based on one or more of location information or a mobility pattern of the terminal device corresponding to the ephemeris of the satellite, a latest ephemeris of the first satellite that serves the terminal device, wherein the updated ephemeris comprises the latest ephemeris of the first satellite that serves the terminal device, the satellite identifier comprises the identifier of the first satellite that serves the terminal device, and the orbit identifier comprises the identifier of the orbit in which the first satellite that serves the terminal device is located.

**23.** The method according to any one of claims 15 to 22, wherein the first network element is an access and mobility management function network element or a capability exposure network element.

**24.** The method according to any one of claims 15 to 23, wherein the second network element is an application function network element, the satellite access network device, or a core network element.

**25.** The method according to any one of claims 15 to 24, wherein the ephemeris comprises one or more of a satellite level parameter or an orbital plane parameter.

**26.** A communication apparatus, comprising units configured to perform the steps of the method according to any one of claims 1 to 14.

**27.** A communication apparatus, comprising units configured to perform the steps of the method according to any one of claims 15 to 25.

**28.** A communication apparatus, comprising at least one processor and an interface circuit, wherein the at least one processor is configured to perform the method according to any one of claims 1 to 14.

**29.** A communication apparatus, comprising at least one processor and an interface circuit, wherein the at least one processor is configured to perform the method according to any one of claims 15 to 25.

**30.** A communication system, comprising the apparatus according to claim 28 and another apparatus connected to the apparatus.

**31.** A communication system, comprising the apparatus according to claim 29 and another apparatus connected to the apparatus.

**32.** A chip system, wherein the chip system comprises one or more interface circuits and one or more processors, the interface circuit and the processor are interconnected through a line, and the processor is configured to perform the method according to any one of claims 1 to 14, or is configured to perform the method according to any one of claims 15 to 25.

**33.** A computer-readable storage medium, wherein the computer-readable storage medium stores a computer program or instructions; and when a computer reads and executes the computer program or the instructions, the computer is enabled to perform the method according to any one of claims 1 to 14, or perform the method according to any one of claims 15 to 25.

**34.** A computer program product, comprising computer-executable instructions, wherein the computer-executable instructions are used to enable a computer to perform the method according to any one of claims 1 to 14, or perform the method according to any one of claims 15 to 25.

NSSF  NEF  NRF  PCF  UDM  AF

Nnssf  Nnef  Nnrf  Npcf  Nudm  Naf

Nansf  Namf  Nsmf

AUSF  AMF  SMF

N1

N2  N4

Terminal device  RAN  UPF  DN

N3  N6

FIG. 1

FIG. 2

FIG. 3

```
┌─────────────────┐                              ┌─────────────────┐
│  First network  │                              │    Terminal     │
│    element      │                              │     device      │
└────────┬────────┘                              └────────┬────────┘
         │                                                │
         │    S209: Send ephemeris update indication      │
         │    information, where the ephemeris update     │
         │    indication information is used to indicate  │
         │    to update an ephemeris in the terminal      │
         │◄─────────────── device ────────────────────────│
         │                                                │
┌────────┴────────────────────────────┐                   │
│ S210: Determine whether the ephemeris│                  │
│  in the terminal device needs to be  │                  │
│            updated                   │                  │
└────────┬────────────────────────────┘                   │
         │    S220: Send first information, where the      │
         │    first information includes an updated        │
         │    ephemeris or indication information          │
         │    indicating that the ephemeris does not       │
         │──────────────── change ───────────────────────►│
         │                                                │
```

## FIG. 4

```
┌──────────┐              ┌──────────┐                    ┌──────────┐
│  Second  │              │  First   │                    │ Terminal │
│ network  │              │ network  │                    │  device  │
│ element  │              │ element  │                    │          │
└────┬─────┘              └────┬─────┘                    └────┬─────┘
     │   S211: Send a first    │                              │
     │   request, where the    │                              │
     │   first request is used │                              │
     │   to request an updated │                              │
     │◄────── ephemeris ───────│                              │
     │                         │                              │
┌────┴──────────────────┐      │                              │
│ S212: Determine, based │     │                              │
│  on the first request, │     │                              │
│  whether an ephemeris  │     │                              │
│ of a satellite changes │     │                              │
└────┬──────────────────┘      │                              │
     │   S213: Send first      │                              │
     │   information, where the │                             │
     │   first information      │   S220: Send the first      │
     │   includes the updated   │   information, where the    │
     │   ephemeris or indication│   first information         │
     │   information indicating  │  includes the updated      │
     │   that the ephemeris does │ ephemeris or the indication│
     │   not change             │   information indicating    │
     │─────────────────────────►│  that the ephemeris does    │
     │                         │        not change           │
     │                         │──────────────────────────────►│
     │                         │                              │
```

## FIG. 5

Second network element

First network element

S310: Determine whether an ephemeris of a satellite changes

S320: Send first information, where the first information includes an updated ephemeris or indication information indicating that the ephemeris does not change

FIG. 6

Second network element

First network element

S309: Send a first request, where the first request is used to request information about an updated ephemeris

S311: Determine, based on the first request, the updated ephemeris or that an ephemeris does not change

S320: Send first information, where the first information includes the updated ephemeris or indication information indicating that the ephemeris does not change

FIG. 7

| Terminal device | SAT RAN | AMF | NRF | NEF | AF |
|---|---|---|---|---|---|

S401: Register an ephemeris update capability

S402: Send a network element update request

S403: Store an NEF profile

S404: Send a network element update response

S405: Send a network element discovery request

S406: Send a network element discovery response

S407: Send an ephemeris update event subscription message

S408: Send an ephemeris update event subscription message

S409: Send an ephemeris update event notification message

S410: Send an ephemeris update event subscription message

S411: Send uplink NAS information

S412: Ephemeris update indication information

FIG. 8

Communication apparatus 500

Processing unit 510

Transceiver unit 520

FIG. 9

Communication apparatus 600

Processor
610

Memory
620

Transceiver
630

FIG. 10

Communication apparatus 700

Processing unit 710

Transceiver unit 720

FIG. 11

Communication apparatus 800

Processor
810

Memory
820

Transceiver
830

FIG. 12

900

BBU

RRU

9011

901

9012

Antenna

Radio frequency unit

9021    Board    9022

Memory    Processor

902

FIG. 13

## INTERNATIONAL SEARCH REPORT

International application No.

**PCT/CN2021/082555**

### A.    CLASSIFICATION OF SUBJECT MATTER

H04B 7/185(2006.01)i

According to International Patent Classification (IPC) or to both national classification and IPC

### B.    FIELDS SEARCHED

Minimum documentation searched (classification system followed by classification symbols)

H04B;G01S

Documentation searched other than minimum documentation to the extent that such documents are included in the fields searched

Electronic data base consulted during the international search (name of data base and, where practicable, search terms used)

CNKI; CNPAT; WPI; EPODOC; 3GPP: 星历, 历书, 历表, 更新, 改变, 变化, 最新, 指示, 卫星, 核心网, 网元, 接入网, 标识, 轨道, 请求, ephemer+, update, change, new, indicat+, satellite, core network, element, access network, identif+, request, orbit

### C.    DOCUMENTS CONSIDERED TO BE RELEVANT

| Category* | Citation of document, with indication, where appropriate, of the relevant passages | Relevant to claim No. |
|---|---|---|
| X | CN 101566678 A (LIU, Jian) 28 October 2009 (2009-10-28) description, page 6 line 11 to page 7 line 15 | 1-34 |
| A | CN 102918414 A (QUALCOMM INC.) 06 February 2013 (2013-02-06) entire document | 1-34 |
| A | CN 109270559 A (CHUMEN WENWEN INFORMATION TECHNOLOGY CO., LTD.) 25 January 2019 (2019-01-25) entire document | 1-34 |
| A | US 2019041526 A1 (QUALCOMM INCORPORATED) 07 February 2019 (2019-02-07) entire document | 1-34 |
| A | CN 103675841 A (MAISHI ELECTRONIC (SHANGHAI) CO., LTD.) 26 March 2014 (2014-03-26) entire document | 1-34 |

☐ Further documents are listed in the continuation of Box C.      ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **22 April 2021** | **23 June 2021** |

| Name and mailing address of the ISA/CN | Authorized officer |
|---|---|
| China National Intellectual Property Administration (ISA/CN) No. 6, Xitucheng Road, Jimenqiao, Haidian District, Beijing 100088 China | |
| Facsimile No. (86-10)62019451 | Telephone No. |

Form PCT/ISA/210 (second sheet) (January 2015)

**INTERNATIONAL SEARCH REPORT**
Information on patent family members

International application No.

**PCT/CN2021/082555**

| Patent document cited in search report | | | Publication date (day/month/year) | Patent family member(s) | | | Publication date (day/month/year) |
|---|---|---|---|---|---|---|---|
| CN | 101566678 | A | 28 October 2009 | None | | | |
| CN | 102918414 | A | 06 February 2013 | JP | 2013534078 | A | 29 August 2013 |
| | | | | WO | 2011149781 | A2 | 01 December 2011 |
| | | | | JP | 2015121556 | A | 02 July 2015 |
| | | | | US | 2011291885 | A1 | 01 December 2011 |
| | | | | EP | 2577344 | A2 | 10 April 2013 |
| | | | | KR | 20130032334 | A | 01 April 2013 |
| CN | 109270559 | A | 25 January 2019 | None | | | |
| US | 2019041526 | A1 | 07 February 2019 | EP | 3417551 | A1 | 26 December 2018 |
| | | | | WO | 2017142584 | A1 | 24 August 2017 |
| | | | | CN | 108702200 | A | 23 October 2018 |
| | | | | JP | 2019512184 | A | 09 May 2019 |
| CN | 103675841 | A | 26 March 2014 | JP | 2014052372 | A | 20 March 2014 |
| | | | | US | 2014062770 | A1 | 06 March 2014 |
| | | | | KR | 20140031801 | A | 13 March 2014 |
| | | | | TW | 201411168 | A | 16 March 2014 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010228291